(19) Europäisches Patentamt
European Patent Office
Office européen des brevets

(11) EP 4 536 001 B1

(12) **EUROPEAN PATENT SPECIFICATION**

(45) Date of publication and mention of the grant of the patent:
**11.03.2026 Bulletin 2026/11**

(21) Application number: **23731986.8**

(22) Date of filing: **02.06.2023**

(51) International Patent Classification (IPC):
***A01N 43/12** (2006.01)* ***A01P 7/04** (2006.01)*

(52) Cooperative Patent Classification (CPC):
**A01N 43/12**

(86) International application number:
**PCT/EP2023/064860**

(87) International publication number:
**WO 2023/237444 (14.12.2023 Gazette 2023/50)**

(54) **AGROCHEMICAL FORMULATIONS COMPRISING CRYSTALLINE FORM A OF 4-[(6-CHLORO-3-PYRIDYLMETHYL)(2,2-DIFLUOROETHYL)AMINO]FURAN-2(5H)-ONE**

AGROCHEMISCHE FORMULIERUNGEN, DIE DIE KRISTALLINE FORM A VON 4-[(6-CHLOR-3-PYRIDYLMETHYL)(2,2-DIFLUORETHYL)AMINO]FURAN-2(5H)-ON UMFASSEN

FORMULATIONS AGROCHIMIQUES COMPRENANT UNE FORME CRISTALLINE DE 4-[(6-CHLORO-3-PYRIDYLMÉTHYL)(2,2-DIFLUOROÉTHYL)AMINO]4-ALKOXY(5H)-ONE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **06.06.2022 US 202263349349 P**
**21.06.2022 EP 22180062**

(43) Date of publication of application:
**16.04.2025 Bulletin 2025/16**

(73) Proprietor: **Bayer Aktiengesellschaft**
**51373 Leverkusen (DE)**

(72) Inventors:
- **PERIS URQUIJO, Gorka**
  **50737 Köln (DE)**
- **EGGER, Holger**
  **50825 Köln (DE)**
- **DAVIS, Matthew**
  **42719 Solingen (DE)**
- **OLENIK, Britta**
  **46242 Bottrop (DE)**
- **KEIL, Birgit**
  **40231 Düsseldorf (DE)**
- **GERTZMANN, Rolf**
  **51377 Leverkusen (DE)**
- **RIST, Marc Andre**
  **40549 Düsseldorf (DE)**
- **PRZYBYLA, David**
  **O Fallon, Missouri 63368 (US)**

(74) Representative: **BIP Patents**
**c/o Bayer Intellectual Property GmbH**
**Alfred-Nobel-Straße 50**
**40789 Monheim am Rhein (DE)**

(56) References cited:
**WO-A1-2011/051151**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 536 001 B1

## Description

### Summary of the invention

The present invention relates to a novel agrochemical formulations comprising a novel crystalline form of 4-[(6-chloro-3-pyridylmethyl)(2,2-difluoroethyl)amino]furan-2(5H)-one according to formula (1)

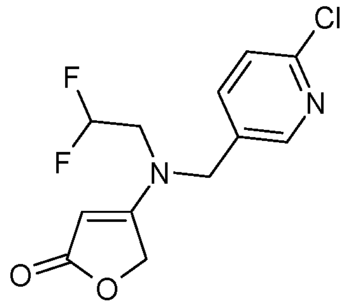

(1),

which is the polymorphic form A, to a process for its preparation and to the novel crystalline form itself, as well as to its use for the production of agrochemical formulations and to its use in plant protection applications, especially to its use as an insecticide.

The compound of the formula (1) which has the common name flupyradifurone and the IUPAC-name 4-[(6-chloro-3-pyridylmethyl)(2,2-difluoroethyl)amino]furan-2(5H)-one and a process for its production is known from WO-A-2007/115644. A process for its preparation is also known from WO-A-2009/036899.

An amorphous and a crystalline form of the compound of formula (I) are already known from WO-A-2011/051151. The crystalline form disclosed in WO-A-2011/051151 has been marked therein as being thermodynamic stable and has been characterized in that its X-ray powder diffractogram has as characteristic signals at 25°C and with Cu-Kα radiation (1.540598 Å) being used at least 3 of the 2Θ (2 theta) values below:

| |
|---|
| 2Θ = 16.8° ±0.2 |
| 2Θ = 17.8° ±0.2 |
| 2Θ = 20.2° ±0.2 |
| 2Θ = 21.7° ±0.2 |
| 2Θ = 23.6° ±0.2 |
| 2Θ = 23.9° ±0.2 |
| 2Θ = 24.7° ±0.2 |
| 2Θ = 25.3° ±0.2 |

The crystalline form disclosed in WO-A-2011/051151 is the polymorphic form B.

### Background

Polymorphism is the ability of a compound to crystallize in different crystalline phases with different arrangements and/or conformations of the molecules in the crystal lattice. Hence, polymorphs are different crystalline forms of the same pure chemical compound. On account of the different arrangement and/or conformation of molecules, polymorphs exhibit different physical, chemical and biological properties. Properties which may be affected include but are not limited to solubility, dissolution rate, stability, optical and mechanical properties, etc. The relative stability of a polymorph depends on its free energy, i.e. a more stable polymorph has a lower free energy. Under a defined set of experimental conditions only one polymorph has the lowest free energy. This polymorph is the thermodynamically stable form and all other polymorph(s) is (are) termed metastable form(s). A metastable form is one that is thermodynamically unstable but can nevertheless be prepared, isolated and analyzed as a result of its relatively slow rate of transformation.

The occurrence of active substances in different polymorphic forms (hereinafter also named as polymorphs or crystalline forms) is of decisive importance for the production in industrial scale as well as for the development of formulations containing the active substance, as unwanted phase changes can lead to thickening and potentially

solidification of the formulation and/or large crystals, which can lead to blockages in application equipment, e.g. in spray nozzles in agricultural application machinery. The knowledge of the existence of crystalline modifications and their properties is thus of high relevance. Each polymorph is characterized by a specific, uniform packing and arrangement of the molecules in the solid state. Nevertheless, it is generally not predictable whether a given chemical compound forms polymorphs at all and if so, which physical and biological properties the different polymorphs may have.

In addition, pseudopolymophic forms, named hydrates or solvates, can occur. A solvate is a crystalline molecular compound in which molecules of the solvent of crystallisation are incorporated into the host lattice, consisting of unsolvated molecules. A hydrate is a special case of a solvate when the incorporated solvent is water. The presence of solvent molecules in the crystal lattice influences the intermolecular interactions and confers unique physical properties to each solvate. A solvate thus has its own characteristic values of internal energy, enthalpy, entropy, Gibbs free energy, and thermodynamic activity.

## Figures

**Fig. 1a**: X-ray powder diffractogram of polymorphic form A of 4-[(6-chloro-3-pyridylmethyl)(2,2-difluoroethyl)amino]furan-2(5H)-one

**Fig. 1b:** FT Raman spectrum of polymorphic form A of 4-[(6-chloro-3-pyridylmethyl)(2,2-difluoroethyl)amino]furan-2(5H)-one

**Fig. 1c:** IR spectrum of polymorphic form A of 4-[(6-chloro-3-pyridylmethyl)(2,2-difluoroethyl)amino]furan-2(5H)-one

**Fig. 1d**: DSC thermogram of polymorphic form A

**Fig. 2a**: X-ray powder diffractogram of polymorphic form B of 4-[(6-chloro-3-pyridylmethyl)(2,2-difluoroethyl)amino]furan-2(5H)-one

**Fig. 2b**: FT Raman spectrum of polymorphic form B of 4-[(6-chloro-3-pyridylmethyl)(2,2-difluoroethyl)amino]furan-2(5H)-one

**Fig. 2c**: IR spectrum of polymorphic form B of 4-[(6-chloro-3-pyridylmethyl)(2,2-difluoroethyl)amino]furan-2(5H)-one

**Fig. 2d**: DSC thermogram of polymorphic form B

## Detailed description

As pointed out above, one embodiment of the present invention relates to a novel crystalline form A of 4-[(6-chloro-3-pyridylmethyl)(2,2-difluoroethyl)amino]furan-2(5H)-one according to formula (1),

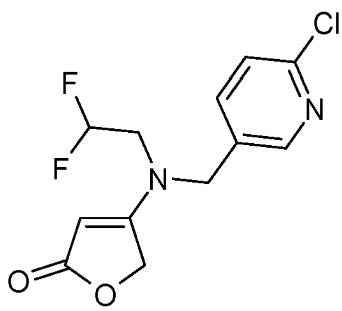

(1).

which hereinafter is also termed as flupyradifurone (FPF).

Surprisingly a new polymorphic form A of 4-[(6-chloro-3-pyridylmethyl)(2,2-difluoroethyl)amino]furan-2(5H)-one of formula (1) has been found which is the thermodynamic stable form and which shows improved properties compared to the polymorphic form B disclosed in WO-A-2011/051151 which has been found to be only metastable although it is kinetically quite stable.

In particular, it was now surprisingly found that the polymorphic form A has improved storage stability at elevated

temperatures.

Moreover, water solubility of form A is significantly lower than that of form B. However, despite the lower solubility it has surprisingly been found that the biological activity / efficacy, in particular in the formulations according to the instant invention, is not reduced.

The compound 4-[(6-chloro-3-pyridylmethyl)(2,2-difluoroethyl)amino]furan-2(5H)-one contains hydrogen atoms at various positions which may be any hydrogen isotope, i.e. $^1H$ or $^2H$ (deuterium). Thus, the compound 4-[(6-chloro-3-pyridylmethyl)(2,2-difluoroethyl)amino]furan-2(5H)-one may contain no, one or more than one deuterium atom. In a preferred embodiment, the compound 4-[(6-chloro-3-pyridylmethyl)(2,2-difluoroethyl)amino]furan-2(5H)-one contains hydrogen in its natural abundance isotopic composition, i.e. about 0.015 % deuterium (molar ratio).

The polymorphic form A of 4-[(6-chloro-3-pyridylmethyl)(2,2-difluoroethyl)amino]furan-2(5H)-one can be characterized by X-ray powder diffractometry on the basis of the respective diffraction diagrams, which are recorded at 25°C and with Cu-K$\alpha$ 1 radiation (1.5406 Å). The polymorphic form A according to the present invention displays at least 3, often at least 5, in particular at least 7, more particularly at least 10, and especially all of the reflections quoted in the following as values:

**Table 1:** X-ray reflections of polymorphic form A

| Reflections [2Θ values] |
|---|
| x±0,2° |
| 12.3 |
| 13.7 |
| 14.7 |
| 15.0 |
| 16.0 |
| 16.1 |
| 17.0 |
| 18.0 |
| 18.2 |
| 20.1 |
| 20.8 |
| 21.0 |
| 21.5 |
| 22.4 |
| 22.6 |
| 23.5 |
| 24.0 |
| 24.8 |
| 25.4 |
| 26.1 |
| 26.3 |
| 27.1 |
| 27.5 |
| 27.8 |
| 28.3 |
| 29.4 |
| 30.1 |
| 30.3 |

(continued)

| Reflections [2Θ values] |
|---|
| x±0,2° |
| 31.5 |
| 32.0 |
| 32.4 |
| 33.1 |
| 33.2 |
| 33.5 |
| 34.2 |
| 35.8 |
| 36.6 |
| 37.3 |

The polymorphic form A according to the present invention is further characterized by the X-ray powder diffractogram depicted in Fig. [1a].

In a preferred embodiment the polymorphic form A according to the present invention displays at least 3, in particular at least 5, more particularly at least 7, even more particularly at least 10, and especially all of the following characteristic reflections quoted as 2Θ value ± 0.2°:15,0; 20,1; 21,0; 22,4; 29,4; 33,1 and 33,2.

In one embodiment the polymorphic form A according to the present invention displays at least the following characteristic reflections quoted as 2Θ value: 21,0; 22,4 and 29,4.

In one embodiment the polymorphic form A according to the present invention displays at least the following characteristic reflections quoted as 2Θ value: 15,0; 20,1; 21,0; 22,4 and 29,4.

In one embodiment the polymorphic form A according to the present invention displays at least the following characteristic reflections quoted as 2Θ value: 15,0; 20,1; 21,0; 22,4; 29,4; 33,1 and 33,2.

The polymorphic form A of 4-[(6-chloro-3-pyridylmethyl)(2,2-difluoroethyl)amino]furan-2(5H)-one can be characterized by Raman spectroscopy on the basis of the respective spectrum, which are recorded at 25°C and with a laser wavelength of 1064 nm and a resolution of 2 $cm^{-1}$.The polymorphic form A according to the present invention displays at least 3, often at least 5, in particular at least 7, and especially all of the bands quoted in the following as peak maxima:

**Table 2:** Raman bands of form A

| Raman band [peak maxima in $cm^{-1}$] Form A |
|---|
| 3120 |
| 3090 |
| 3059 |
| 3046 |
| 3001 |
| 2970 |
| 2949 |
| 2919 |
| 2893 |
| 2874 |
| 1807 |
| 1739 |
| 1711 |
| 1600 |

(continued)

| Raman band [peak maxima in $cm^{-1}$] Form A |
|---|
| 1587 |
| 1566 |
| 1470 |
| 1457 |
| 1441 |
| 1431 |
| 1410 |
| 1396 |
| 1352 |
| 1343 |
| 1318 |
| 1293 |
| 1278 |
| 1245 |
| 1210 |
| 1180 |
| 1164 |
| 1136 |
| 1111 |
| 1098 |
| 1071 |
| 1046 |
| 1026 |
| 1005 |
| 999 |
| 974 |
| 962 |
| 917 |
| 904 |
| 880 |
| 834 |
| 815 |
| 748 |
| 730 |
| 706 |
| 676 |
| 632 |
| 618 |
| 553 |

(continued)

| Raman band [peak maxima in $cm^{-1}$] Form A |
|---|
| 514 |
| 478 |
| 425 |
| 375 |
| 355 |
| 312 |
| 292 |
| 241 |
| 228 |
| 177 |
| 149 |
| 111 |
| 84 |

The polymorphic form A of 4-[(6-chloro-3-pyridylmethyl)(2,2-difluoroethyl)amino]furan-2(5H)-one can be characterized by infrared spectroscopy on the basis of the respective spectrum, which are recorded at 25°C using an universal diamond ATR device and a resolution of 2 $cm^{-1}$. The polymorphic form A according to the present invention displays at least 3, often at least 5, in particular at least 7, and especially all of the bands quoted in the following as peak maxima:

**Table 3:** IR bands of form A

| IR band [peak maxima in $cm^{-1}$] Form A |
|---|
| 3118 |
| 3089 |
| 3057 |
| 3045 |
| 3000 |
| 2948 |
| 1806 |
| 1783 |
| 1760 |
| 1731 |
| 1615 |
| 1597 |
| 1587 |
| 1564 |
| 1490 |
| 1469 |
| 1456 |
| 1440 |
| 1428 |
| 1410 |

(continued)

| IR band [peak maxima in $cm^{-1}$] Form A |
|---|
| 1394 |
| 1352 |
| 1342 |
| 1334 |
| 1317 |
| 1293 |
| 1275 |
| 1239 |
| 1210 |
| 1201 |
| 1178 |
| 1166 |
| 1136 |
| 1118 |
| 1096 |
| 1071 |
| 1043 |
| 1025 |
| 1004 |
| 997 |
| 975 |
| 963 |
| 916 |
| 904 |
| 879 |
| 873 |
| 823 |
| 809 |
| 762 |
| 729 |
| 706 |
| 674 |
| 630 |
| 622 |
| 609 |
| 602 |
| 588 |
| 583 |
| 575 |

(continued)

| IR band [peak maxima in $cm^{-1}$] Form A |
|---|
| 568 |
| 563 |
| 552 |

In addition to the polymorphic form A, polymorphic form B is known from WO-A-2011/051151, which is further characterized in the following.

The polymorphic form B of 4-[(6-chloro-3-pyridylmethyl)(2,2-difluoroethyl)amino]furan-2(5H)-one can be characterized by X-ray powder diffractometry on the basis of the respective diffraction diagrams, which are recorded at 25°C and with Cu-Kα 1 radiation (1.5406 Å). The polymorphic form B displays at least 3, often at least 5, in particular at least 7, more particularly at least 10, and especially all of the reflections quoted in the following as values:

**Table 4:** X-ray reflections of polymorphic form B

| Form B |
|---|
| Reflections [2Θ values] |
| x±0,2° |
| 5.6 |
| 10.1 |
| 10.4 |
| 11.1 |
| 11.9 |
| 12.4 |
| 13.9 |
| 14.1 |
| 14.3 |
| 14.6 |
| 16.1 |
| 16.6 |
| 16.9 |
| 17.9 |
| 18.1 |
| 18.4 |
| 19.1 |
| 19.9 |
| 20.3 |
| 20.7 |
| 21.8 |
| 22.6 |
| 23.1 |
| 23.3 |
| 23.5 |
| 23.7 |

(continued)

| Form B |
|---|
| Reflections [2Θ values] |
| x±0,2° |
| 24.0 |
| 24.2 |
| 24.8 |
| 25.4 |
| 26.0 |
| 26.4 |
| 27.2 |
| 27.5 |
| 27.8 |
| 28.1 |
| 28.3 |
| 28.9 |
| 29.2 |
| 29.7 |
| 30.0 |
| 30.5 |
| 30.7 |
| 30.9 |
| 31.3 |
| 32.0 |
| 32.5 |
| 33.4 |
| 33.9 |
| 34.6 |
| 35.3 |
| 36.2 |
| 36.5 |
| 37.0 |

The polymorphic forms B are further characterized by the X-ray powder diffractograms depicted in Fig. [2a].

The polymorphic form B of 4-[(6-chloro-3-pyridylmethyl)(2,2-difluoroethyl)amino]furan-2(5H)-one can be characterized by Raman spectroscopy on the basis of the respective spectrum, which are recorded at 25°C and with a laser wavelength of 1064 nm and a resolution of 2 $cm^{-1}$. The polymorphic form B displays at least 3, often at least 5, in particular at least 7, and especially all of the bands quoted in the following as peak maxima:

**Table 5**: Raman bands of form B

| Raman band [peak maxima in $cm^{-1}$] Form B |
|---|
| 3125 |
| 3072 |

(continued)

| Raman band [peak maxima in $cm^{-1}$] Form B |
|---|
| 3062 |
| 3051 |
| 3022 |
| 2994 |
| 2975 |
| 2960 |
| 2943 |
| 2911 |
| 2873 |
| 2821 |
| 1727 |
| 1702 |
| 1603 |
| 1589 |
| 1568 |
| 1467 |
| 1458 |
| 1441 |
| 1429 |
| 1419 |
| 1393 |
| 1372 |
| 1357 |
| 1342 |
| 1330 |
| 1318 |
| 1293 |
| 1276 |
| 1253 |
| 1239 |
| 1209 |
| 1188 |
| 1161 |
| 1141 |
| 1112 |
| 1096 |
| 1071 |
| 1060 |
| 1028 |

(continued)

| Raman band [peak maxima in $cm^{-1}$] Form B |
|---|
| 1005 |
| 972 |
| 951 |
| 918 |
| 903 |
| 882 |
| 869 |
| 841 |
| 813 |
| 793 |
| 785 |
| 738 |
| 725 |
| 709 |
| 682 |
| 636 |
| 626 |
| 597 |
| 558 |
| 543 |
| 471 |
| 422 |
| 390 |
| 375 |
| 351 |
| 342 |
| 333 |
| 305 |
| 298 |
| 281 |
| 237 |
| 209 |
| 177 |
| 85 |

The polymorphic form B of 4-[(6-chloro-3-pyridylmethyl)(2,2-difluoroethyl)amino]furan-2(5H)-one can be characterized by infrared spectroscopy on the basis of the respective spectrum, which are recorded at 25°C using an universal diamond ATR device and a resolution of 2 $cm^{-1}$. The polymorphic form B displays at least 3, often at least 5, in particular at least 7, and especially all of the bands quoted in the following as peak maxima:

**Table 6**: IR bands of form B

| IR band [peak maxima in $cm^{-1}$] Form B |
| --- |
| 3122 |
| 3095 |
| 3062 |
| 2993 |
| 1830 |
| 1805 |
| 1784 |
| 1730 |
| 1720 |
| 1713 |
| 1602 |
| 1587 |
| 1568 |
| 1539 |
| 1456 |
| 1438 |
| 1432 |
| 1427 |
| 1416 |
| 1392 |
| 1358 |
| 1342 |
| 1314 |
| 1292 |
| 1268 |
| 1252 |
| 1239 |
| 1208 |
| 1179 |
| 1163 |
| 1141 |
| 1136 |
| 1112 |
| 1099 |
| 1090 |
| 1068 |
| 1051 |
| 1043 |
| 1028 |

(continued)

| IR band [peak maxima in $cm^{-1}$] Form B |
|---|
| 1025 |
| 1006 |
| 999 |
| 972 |
| 949 |
| 942 |
| 915 |
| 903 |
| 881 |
| 868 |
| 836 |
| 823 |
| 813 |
| 794 |
| 778 |
| 736 |
| 727 |
| 711 |
| 685 |
| 680 |
| 634 |
| 626 |
| 585 |
| 578 |
| 569 |
| 559 |

Embodiment for production of form A

In another embodiment, the present invention is directed to a process for the production of the polymorphic form A, comprising the following steps:

a) diluting and/or suspending the compound of formula (1) in a suitable solvent or solvent mixture;

b) adjusting a temperature of between 0 and 25°C optionally by heating or cooling the same; and

c) storing the solution or slurry obtained in step b) at a temperature of between 0 and 25°C until the solvent is evaporated and crystals of polymorphic form A have formed.

The chemical preparation of 4-[(6-chloro-3-pyridylmethyl)(2,2-difluoroethyl)amino]furan-2(5H)-one according to formula (1) in known from the prior art such WO-A-2007/115644 or WO-A-2009/036899. The compound of formula (1) as used in step a) can thus be prepared according to WO-A-2007/115644 or WO-A-2009/036899 to which full reference is made hereby.

Preferably the chemical preparation of 4-[(6-chloro-3-pyridylmethyl)(2,2-difluoroethyl)amino]furan-2(5H)-one is

performed according to WO-A-2007/115644 with butyronitrile as a solvent. The crystallization and filtration of 4-[(6-chloro-3-pyridylmethyl)(2,2-difluoroethyl)amino]furan-2(5H)-one is preferably performed in butanol. After filtration the crystals obtained are preferably washed with ethanol.

The compound of formula (1) in step a) can essentially be any known form of 4-[(6-chloro-3-pyridylmethyl)(2,2-difluoroethyl)amino]furan-2(5H)-one. This means that 4-[(6-chloro-3-pyridylmethyl)(2,2-difluoroethyl)amino]furan-2(5H)-one can be used in amorphous form or in a mixture of different polymorphic forms or in a mixture containing an amorphous and one or more different polymorphic forms.

Suitable solvents or solvent mixtures which can be used to dilute and/or suspend the compound of formula (1) in step a) and from which the compound of formula (1) is obtained in polymorphic form A in step c), are any suitable solvent such as aromatic solvents or alcohols or esters or water, preferably toluene, methanol, ethanol, butanol, ethyl acetate, isopropanol or water.

The solution of 4-[(6-chloro-3-pyridylmethyl)(2,2-difluoroethyl)amino]furan-2(5H)-one can also be prepared by transferring a reaction mixture obtained by chemical reaction, containing 4-[(6-chloro-3-pyridylmethyl)(2,2-difluoroethyl)amino]furan-2(5H)-one, if necessary after removal of reagents and/or side products into a solvent or solvent mixture according to the present invention.

In step b) the temperature of the solution or slurry is adjusted to a temperature of 0°C to 25°C. This can be done by cooling or heating or by waiting until the temperature has adjusted to the room temperature (if it is between 0°C and 25°C).

In step c) the solution or slurry obtained in step b) is stored at a temperature of between 0 and 25°C until the solvent is evaporated and crystals of polymorphic form A have formed. Preferably, the polymorphic form A is isolated from the solvent or solvent mixture by allowing the solution or slurry to stand at the crystallization conditions of step c) until at least 90 wt.-% of the solvent or solvent mixture is evaporated.

The crystallization of polymorphic form A can be promoted or accelerated by seeding with seed crystals of form A.

The isolation of the polymorphic form A from the mother liquid is effected by common techniques known in the art, for example by filtration, centrifugation or by decanting.

The isolated polymorphic form A can optionally be washed with any solvent, preferably with the solvent or solvent mixture used for crystallization, with water or with a mixture of the solvent or solvent mixture and water. The washing step can optionally be repeated, whereby washing with water often is the last washing step. The washing is typically performed at temperatures below 30°C, often below 25°C and in particular below 20°C, optionally at 0 °C. In a further, optionally step, the crystals of polymorphic form A can be dried and then supplied for further processing.

By means of the crystallization according to the present invention, form A of 4-[(6-chloro-3-pyridylmethyl)(2,2-difluoroethyl)amino]furan-2(5H)-one is obtained with at least 85 %, in particular 90 %, and most preferably at least ≥95 %.

This means, that apart from other possible impurities, preferably the amount of remaining form B or amorphous forms is < 15 %, in particular < 10%, and most preferably < 5%.

The content of form A according to the present invention is analyzed by IR spectroscopy. Based on calculated electronically mixed IR spectra (mixed by a software calculator in 5 % steps) a calibration curve, using a PLS regression, is generated. With this curve the proportional shares of the different forms are calculated. Due to the calibration accuracy the content of 100 % of polymorphic form A is not excluded by the above wording.

Thus, a particular embodiment of the present invention relates to 4-[(6-chloro-3-pyridylmethyl)(2,2-difluoroethyl)amino]furan-2(5H)-one which consists of at least 85% and often at least 90 % or at least ≥95 % of the polymorphic form A.

Another, alternative embodiment of the present invention is the process for the preparation of aqueous dispersions of Flupyradifurone, whereby the form of Flupyradifurone can be steered/controlled as a function of the milling parameters. The relative amount of form A in mixtures of form B and form A of Flupyradifurone can be maintained or increased depending on the milling parameters (see Table 11).

The choice of grinding media during the milling process is known to affect the energy input during milling (Austin, L.G., Klimpel, R.R. and Luckie, P.T., 1984. Process engineering of size reduction: ball milling. Society of Mining Engineers of the AIME), so that denser grinding media (e.g. Zirconium Oxide beads) induce higher energy this resulting in, amongst other effects, an increase of the exit temperature of the mill base, a potential lowering of the viscosity of the mill base, this causing a direct increase in the milling efficiency. We have observed that under these conditions the relative amount of Flupyradifurone form A can be increased from a low amount to form A being the major component in the mixture.

On the contrary, the use of less dense grinding media material (e.g. glass beads) does not affect the temperature of the milling process, and as such within the limits of analytical detection form A does not increase during milling with glass beads at room temperature.

Embodiment for agrochemical formulations with form A

In another embodiment, the present invention is directed to a plant protection agent in the form of customary formulations (agrochemical formulations) containing the polymorphic form A of 4-[(6-chloro-3-pyridylmethyl)(2,2-difluoroethyl)amino]furan-2(5H)-one wherein at least 85 % by weight (preferably at least 90 % by weight and more preferably at

least 95 % by weight) of the compound of formula (1) is present in its crystalline form A. The remaining less than 15 % by weight (preferably less than 10% by weight, more preferably less than 5 % by weight) contains other polymorphic forms of the compound of formula (I)) such as the amorphous or the crystalline form disclosed in WO-A-2011/051151 (form B).

For the avoidance of doubt the term at least 85 % by weight or at least 90 % by weight or at least 95 % by weight means 85 - 100 % by weight or 90 - 100 % by weight or 95 - 100 % by weight.

Formulation types

Customary formulations (agrochemical formulations) are, for example, water-soluble liquids (SL), emulsion concentrates (EC), emulsions in water (EW), suspension concentrates (SC, SE, FS, OD), water-dispersible granules (WG), granules (GR) and capsule concentrates (CS); these and further possible formulation types are described, for example, by Crop Life International and in Pesticide Specifications, Manual on development and use of FAO and WHO specifications for pesticides, FAO Plant Production and Protection Papers - 173, prepared by the FAO/WHO Joint Meeting on Pesticide Specifications, 2004, ISBN: 9251048576.

Preference is given to formulations or use forms comprising auxiliaries, for example extenders, solvents, spontaneity promoters, carriers, emulsifiers, dispersants, frost protection agents, biocides, thickeners and/or further auxiliaries, for example adjuvants. An adjuvant in this context is a component which enhances the biological effect of the formulation, without the component itself having any biological effect. Examples of adjuvants are agents which promote retention, spreading, attachment to the leaf surface or penetration.

The composition of the invention may be provided to the end user as ready-for-use formulation, i.e. the compositions may be directly applied to the plants or seeds by a suitable device, such as a spraying or dusting device. Alternatively, the compositions may be provided to the end user in the form of concentrates which have to be diluted, preferably with water, prior to use.

These formulations are prepared in a known way, for example by mixing the compounds of the formula (I) with auxiliaries such as, for example, extenders, solvents and/or solid carriers and/or other auxiliaries such as, for example, surfactants. The formulations are produced either in suitable facilities or else before or during application.

The composition of the invention may be in any customary composition type, such as solutions (e.g aqueous solutions), emulsions, water- and oil-based suspensions, powders (e.g. wettable powders, soluble powders), dusts, pastes, granules (e.g. soluble granules, granules for broadcasting), suspoemulsion concentrates, natural or synthetic products impregnated with the compound combination of the invention, fertilizers and also microencapsulations in polymeric substances. The compound combination of the invention may be present in a suspended, emulsified or dissolved form. Examples of particular suitable composition types are solutions, water soluble concentrates (e.g. SL, LS), dispersible concentrates (DC), suspensions and suspension concentrates (e.g. SC, OD, OF, FS), emulsifiable concentrates (e.g. EC), emulsions (e.g. EW, EO, ES, ME, SE), capsules (e.g. CS, ZC, ZS, ZW), pastes or gels (e.g. PA, GD), wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials such as seeds (e.g. GW, GF). These and further compositions types are defined by the Food and Agriculture Organization of the United Nations (FAO). An overview is given in the "Catalogue of pesticide formulation types and international coding system", Technical Monograph No. 2, 7th Ed. March 2017, Croplife International.

Particular preference is given to formulations as suspensions and suspension concentrates (e.g. SC, OD, OF, FS)

These formulations are prepared in a known manner, by mixing form A (polymorph form A) of the compounds of the formula (I) with customary additives such as, for example, customary extenders and also solvents or diluents, colorants, wetting agents, dispersants, emulsifiers, antifoams, preservatives, secondary thickeners, adhesives, gibberellins and also water.

Formulation of the present invention

The formulations according to the invention are exemplified as shown below:
In one preferred embodiment the agrochemical formulation comprises

a) the polymorphic form A of 4-[(6-chloro-3-pyridylmethyl)(2,2-difluoroethyl)amino]furan-2(5H)-one wherein at least 85 % by weight (preferably at least 90 % by weight and more preferably at least 95 % by weight) of the compound of formula (1) is present in its crystalline form A.

The remaining less than 15 % by weight (preferably less than 10% by weight, more preferably less than 5 % by weight) contains other polymorphic forms of the compound of formula (I)) such as the amorphous or the crystalline form disclosed in WO-A-2011/051151.

For the avoidance of doubt the term at least 85 % by weight or at least 90 % by weight or at least 95 % by weight means 85 - 100 % by weight or 90 - 100 % by weight or 95 - 100 % by weight.
This definition is true for all references to polymorphic form A if not explicitly otherwise indicated in the instant invention.
In another preferred embodiment, the formulation comprises

a) the polymorphic form A of 4-[(6-chloro-3-pyridylmethyl)(2,2-difluoroethyl)amino]furan-2(5H)-one wherein at least 85 % by weight (preferably at least 90 % by weight and more preferably at least 95 % by weight) of the compound of formula (1) is present in its crystalline form A.
b) one or more dispersant,
c) one or more rheological control agent (rheological modifier),
d) optionally one or more pH-buffer,
e) optionally one or more antifoams,
f) optionally one or more biocides,
g) optionally one or more antifreeze agents, and
h) carrier (filler) to 1 l (liter).

In a further preferred embodiment, the formulations contains

a) the polymorphic form A of 4-[(6-chloro-3-pyridylmethyl)(2,2-difluoroethyl)amino]furan-2(5H)-one wherein at least 85 % by weight (preferably at least 90 % by weight and more preferably at least 95 % by weight) of the compound of formula (1) is present in its crystalline form A.
b) one or more dispersant,
c) one or more rheological control agent (rheological modifier),
d) one or more pH-buffer,
e) one or more antifoams,
f) one or more biocides,
g) one or more antifreeze agents, and
h) carrier (filler) to 1 L (litre).

In a preferred embodiment, the polymorphic form A of 4-[(6-chloro-3-pyridylmethyl)(2,2-difluoroethyl)amino]furan-2(5H)-one a) as defined above is contained in the composition according to the present invention

in the concentration range of 200-600 g/L,
preferably in the concentration range 300-500 g/L, and
most preferably in the concentration range 400-500 g/L.

In another preferred embodiment of the present invention dispersants b) is present

in the concentration range of 10-200 g/L,
preferably in the concentration range of 20-150 g/L,
more preferably in the concentration range 40-100 g/L.
even more preferably in the concentration range 50-90 g/L, and
most preferably in the concentration range 60-80 g/L,

In yet another embodiment of the present invention the rheology control agent c) is present in the concentration range of 0.1-10 g/L, and
preferably 6-10 g/L.
In one embodiment of the present invention a **pH buffer agent d) is present**

in the concentration range of 0-1 g/L,
preferably the pH buffer agent is mandatory and present in 0.01-10 g/L.

In one embodiment of the present invention an **antifoam** e) is present in the concentration range of 0.1-2 g/L.
In one embodiment of the present invention a **biocide** f) in present in the concentration range of 0.1-3 g/L.
In one embodiment of the present invention an **antifreeze g)** is present in the concentration range of 5-100 g/L, preferably of 10-100 g/L.
Preferably the carrier (filler) according to the instant invention is added to 1 L, wherein even more preferred the

carrier is water.

In one preferred embodiment, the formulation comprises

a) in the concentration range of 400-500 g/L,
b) in the concentration range of 60-80 g/L,
c) in the concentration range of 6-10 g/L, and
h) water to 1L.

In one preferred embodiment, the formulation comprises

a) in the concentration range of 400-500 g/L,
b) in the concentration range of 60-80 g/L,
c) in the concentration range of 6-10 g/L,
d) in the concentration range of 0.01-10 g/L,
e) in the concentration range of 0.1-2 g/L,
f) in the concentration range of 0.1-3 g/L,
g) in the concentration range 10-100 g/L, and
h) water to 1 L (litre).

Further adjuvants and auxiliaries not yet listed may be present as component i) like adhesives, stickers and colorants, antioxidants, light stabilizers, in particular UV stabilizers, other agents which improve chemical and/or physical stability and Butylhydroxytoluene [3.5-Di-tert-butyl-4-hydroxytoluol, CAS-No. 128-37-0].

If the formulation is used as seed coating formulation, component i) is mandatory.

When treating the seed, care must generally be taken that the amount of form A of the compounds of the formula (I) applied to the seed and/or the amount of further additives is chosen in such a way that the germination of the seed is not adversely affected, or that the resulting plant is not damaged. This must be ensured particularly in the case of active compounds which can exhibit phytotoxic effects at certain application rates.

In general, form A of the compounds of the formula (I) is applied to the seed in a suitable formulation. Suitable formulations and processes for seed treatment are known to the person skilled in the art.

Form A of the compounds of the formula (I) can be converted to the customary seed dressing formulations, such as solutions, emulsions, suspensions, powders, foams, slurries or other coating compositions for seed, and also ULV formulations.

The plant protection formulation may additionally comprise one or more further active substance(s) (k) selected from the group consisting of herbicides, insecticides, acaricides, fungicides, safeners and/or plant growth regulator.

Moreover, in the ranges of preference stated in the present invention, the different levels of preference should be understood such that they can be combined with one another in permutations, but in any case identical levels of preference and especially the most preferred embodiment/level of preference in each case are to be combined with one another and are indeed disclosed as such a combination.

Compositions as described above that consist solely of the essential components (not optional components) should likewise be considered to be disclosed.

The auxiliaries used may be substances suitable for imparting special properties, such as certain physical, technical and/or biological properties, to the formulation of the compounds of the formula (I), or to the use forms prepared from these formulations (for example ready-to-use pesticides such as spray liquors or seed dressing products).

Dispersant b)

As used herein, the term "dispersant" refers to substances known in the state of the art to stabilize solid colloids of active ingredient. The dispersant can be an ionic (cationic or anionic), amphoteric or non-ionic surfactant, such as ionic or non-ionic or amphoteric dispersant(s), emulsifier(s), foam former(s), dispersant(s), wetting agent(s), and any mixtures thereof, including standard surface-active substances present in formulations of active agrochemical ingredients

Examples of suitable anionic surfactants include, but are not limited to,

- salts of polyacrylic acid
- salts of polymers of mixtures of acrylic acid/acrylate esters
- salts of polymers of mixtures of acrylic acid/styrene
- salts of lignosulfonic acid (such as sodium lignosulfonate)
- salts of phenolsulfonic acid
- salts of condensation products of phenolsulphonic acid and formaldehyde

- salts of naphthalenesulfonic acid,
- salts of naphthalenesulphonic acid and formaldehyde condensation products
- salts of sulfonates of condensed naphtalenes or alkyl napthtalenes
- salts of sulfonates of dodecyl- and tridecylbenzenes
- salts of sulfosuccinic or sulfosuccinamate esters,
- salts of alkyl sulfates
- salts of alkyl polyethoxylated and/or polypropoxylated sulfates
- salts of paraffin sulfonates
- salts of alkyl sulfonates
- salts of alkyl polyethoxylated and/or polypropoxylated sulfonates
- salts of aryl sulfates
- salts of aryl polyethoxylated and/or polypropoxylated sulfates
- salts of aryl sulfonates
- salts of aryl polyethoxylated and/or polypropoxylated sulfonates
- salts of alkylaryl sulfates
- salts of alkylaryl polyethoxylated and/or polypropoxylated sulfates
- salts of alkylaryl sulfonates
- salts of alkylaryl polyethoxylated and/or polypropoxylated sulfonates
- salts of diphenyl sulfonates, and of diphenyloxide sulfonates
- salts of alpha-olefinsulfonates
- salts of sulfonates of fatty acids and oils
- salts of alpha-sulfonated methyl esters
- salts of taurine derivatives (preferably alkyl taurates)
- salts of isethionates
- salts of alkyl phosphoric esters
- salts of aryl phosphoric esters
- salts of alkylaryl phosphoric esters
- salts of phosphoric esters of polyethoxylated and/or polypropoxylated aliphatic linear or branched alcohols
- salts of phosphoric esters of polyethoxylated and/or polypropoxylated aryl alcohols
- protein hydrolysates,
- lignosulfite waste liquors
- salts of polystyrenesulphonic acids
- salts of polyvinylsulphonic acids
- salts of carboxylates
- salts of ether carboxylates

Any reference to salts in this paragraph refers preferably to the respective alkali, alkaline earth and ammonium salts.

Examples of suitable cationic surfactants include, but are not limited to,

- those that contain units comprising primary, secondary, tertiary and/or quaternary amine groups that can either form part of the main polymer chain or can be borne by a side substituent directly connected thereto.
- cationic polymers based on acrylamide, methacrylamide,
- N-vinylpyrrolidone
- quaternized N,N-dimethylamino methacrylate,
- diallyldimethylammonium chloride,
- quaternized vinylimidazole (3-methyl-I-vinyl-IH-imidazol-3-ium chloride)
- acrylamidopropyltrimonium chloride
- cassia hydroxypropyltrimonium chloride,
- guar hydroxypropyltrimonium chloride or 25 polygalactomannan 2-hydroxypropyltrimethylammonium chloride ether
- starch hydroxypropyltrimonium chloride and cellulose hydroxypropyltrimonium chloride.
- polyquaternium-5, polyquaternium-6, polyquaternium-7, polyquaternium-l0, polyquaternium-11, polyquaternium-16, polyquaternium-22, polyquaternium-28, polyquaternium-43, polyquaternium-44, polyquaternium-46

Examples of suitable non-ionic surfactants include, but are not limited to,

- polycondensates of ethylene oxide and propylene oxide

◦ compounds based on ethylene oxide and propylene oxide, having mean molar masses between 200 and 10 000 and preferably 1000 to 4000 g/mol, where the proportion by mass of the polyethoxylated block varies between 10% and 80%.

- polycondensates of ethylene oxide and/or propylene oxide with fatty alcohols

  ◦ polyethylene glycol ethers of branched or linear alcohols
  ◦ polypropylene glycol ethers of branched or linear alcohols
  ◦ polycondensates of polyethylene and polypropylene glycol ethers of branched or linear alcohols, whereby the polyethylene and polypropylene sections of the surfactant can be grafted next to each other, or they can be randomly interspersed.
  ◦ end group-capped and non-end group-capped alkoxylated linear and branched, saturated and unsaturated alcohols (e.g. butoxy polyethylene-polypropylene glycols),

- polycondensates of ethylene oxide and/or propylene oxide with fatty acids

  ◦ reaction products of fatty acids or fatty acid alcohols with ethylene oxide and/or propylene oxide

- polycondensates of ethylene oxide and/or propylene oxide with phenols, substituted phenols (preferably alkylphenols or arylphenols): such as tristyrylphenol ethoxylate or alkylaryl polyglycol ethers or nonylphenol ethoxylate
- polycondensates of ethylene oxide and/or propylene oxide with fatty amines
- polyoxyethylene fatty acid esters such as castor oil ethoxylate
- polyoxyethylene fatty alcohol ethers
- fatty esters of polyols (such as fatty acid esters of glycerol, sorbitol or sucrose), and ethoxylates thereof, such as esters of polyglycerin ethoxylates, or ester of ethoxylated sorbitol
- fatty esters of alkanolamides
- methylcellulose
- polyvinyl alcohol
- polyvinylpyrrolidone

  ◦ copolymer of PVP and dimethylaminoethyl methacrylate
  ◦ butylated PVP

- copolymers of polyvinyl alcohol and polyvinylpyrrolidone
- copolymers of (meth)acrylic acid and (meth)acrylic acid esters
- polyoxyalkylenamines
- polyoxyethylene alkanediol
- polyoxyethlyene and/or polyoxypropylene alkyne diols
- copolymer of vinyl chloride and vinyl acetate and partially hydrolysed vinyl acetate
- modified cellulose types
- alkyl polyglucosides

Examples of suitable amphoteric surfactants include, but are not restricted to

- Aminopropionates and iminodipropionates
- imidazoline derivatives, such as amphodiacetates, amphodipropionates, amphohydroxypropylsulfonates
- betaines
- sultaines
- phosphobetaines
- amine oxides.

Rheological control agent c) (Thickener/modifier)

As used herein, the term **"rheological modifier"** refers to substances known in the state of the art to stabilize dispersions of active ingredient by affecting the rheological properties of the dispersion.
In addition, the formulations and the use forms derived therefrom may also comprise, as additional auxiliaries, stickers/rheological modifiers/thickeners such as carboxymethylcellulose and natural and synthetic polymers in the form of powders, granules or latices, such as gum arabic, polyvinyl alcohol and polyvinyl acetate, or else natural phospholipids

such as cephalins and lecithins and synthetic phospholipids. Further auxiliaries may be mineral and vegetable oils.

Suitable rheological modifiers, thickeners by way of example are

- Polysaccharides including xanthan gum, guar gum and hydroxyethyl cellulose. Examples are Kelzan®, Rhodopol® G and 23, Satiaxane® CX911 and Natrosol® 250 range.
- Clays including montmorillonite, bentonite, sepiolite, attapulgite, laponite, hectorite. Examples are Veegum® R, Van Gel® B, Bentone® CT, HC, EW, Pangel® M100, M200, M300, S, M, W, Attagel® 50, Laponite® RD,
- Fumed and precipitated hydrophylic silica, examples are Aerosil® 200, Aerosil® 380, Sipernat® 22.
- Fumed and precipitated hydrophobic silica, examples are Aerosil® R812, Aerosil® R812S, Aerosil® R972
- pH-Buffer d)

As used herein, the term "pH Buffer"refers to substances known in the state of the art capable of maintaining a defined pH in an aqueous solution. Examples of such buffers are listed in the CRC Handbook of Chemistry and Physics (ISBN: 1-4987-5428-7).

Preferred are acetic acid, citric acid, formic acid, phosphoric acid, sulfuric acid.

Further preferred are acetic acid, citric acid.

Most preferred is citric acid.

Antifoams e)

As used herein, the term "antifoam" refers to substances known in the state of the art capable of preventing excess foaming in a formulation during manufacturing and/or application by the customer. Suitable defoaming performance is such that the FAO limits for foam persistence codified in the CIPAC Method 47.3 are maintained by agrochemical formulations at all times of its useful life.

Suitable antifoams are all substances which are customarily used for this purpose in agrochemical compositions.

Preference is given to silicone oils and magnesium stearate.

Biocides f)

As used herein, the term **"biocide"** refers to substances known in the state of the art capable of preventing microbial/fungal growth in water-based formulations.

Suitable preservatives are all substances which are customarily used for this purpose in agrochemical compositions of this type.

Suitable biocides are preservatives, e.g. dichlorophene and benzyl alcohol hemiformal, 5-chloro-2-methyl-4-isothiazolin-3-one [CAS-No. 26172-55-4], 2-methyl-4-isothiazolin-3-one [CAS-No. 2682-20-4] or 1.2-benzisothiazol-3(2H)-one [CAS-No. 2634-33-5]. Examples which may be mentioned are Preventol® D7 (Lanxess), Kathon® CG/ICP (Dow), Acticide® SPX (Thor GmbH) and Proxel® GXL (Arch Chemicals).

Antifreeze agent g)

Suitable antifreeze agents and cold stabilizers are, e.g. propylene glycol, ethylene glycol, urea, glycerine, inorganic salts (e.g. sodium chloride, potassium chloride, sodium sulfate, potassium sulfate.)

Carriers h):

Suitable extenders/carriers are, for example, water, polar and nonpolar organic chemical liquids, for example from the classes of the aromatic and non-aromatic hydrocarbons (such as paraffins, alkylbenzenes, alkylnaphthalenes, chlorobenzenes), the alcohols and polyols (which, if appropriate, may also be substituted, etherified and/or esterified), the ketones (such as acetone, cyclohexanone), esters (including fats and oils) and (poly)ethers, the unsubstituted and substituted amines, amides, lactams (such as N-alkylpyrrolidones) and lactones, the sulfones and sulfoxides (such as dimethyl sulfoxide).

If the extender utilized is water, it is also possible to use, for example, organic solvents as auxiliary solvents. Useful liquid solvents are essentially: aromatics such as xylene, toluene or alkylnaphthalenes, chlorinated aromatics or chlorinated aliphatic hydrocarbons such as chlorobenzenes, chloroethylenes or methylene chloride, aliphatic hydrocarbons such as cyclohexane or paraffins, for example mineral oil fractions, mineral and vegetable oils, alcohols such as butanol or glycol and their ethers and esters, ketones such as acetone, methyl ethyl ketone, methyl isobutyl ketone or cyclohexanone, strongly polar solvents such as dimethylformamide and dimethyl sulfoxide, which can be added to the water.

Examples of suitable *liquid extenders*/*carriers*/*solvents* include, but are not limited to, water, organic solvents and combinations thereof. Examples of suitable *liquid extenders*/*carriers*/*solvents* include polar and nonpolar organic chemical liquids, for example from the classes of

- aromatic and nonaromatic hydrocarbons (such as cyclohexane, paraffins, alkylbenzenes, xylene, toluene, tetrahydronaphthalene, alkylnaphthalenes, chlorinated aromatics or chlorinated aliphatic hydrocarbons such as chlorobenzenes, chloroethylenes or methylene chloride),

- alcohols and polyols (which may optionally also be substituted, etherified and/or esterified, such as ethanol, propanol, butanol, benzylalcohol, cyclohexanol or glycol, 2-ethyl hexanol),

- ethers such as

    ◦ dioctyl ether, tetrahydrofuran, dimethyl isosorbide, solketal, cyclopentyl methyl ether, dibenzyl ether

    ◦ the Dowanol glycol ether products of Dow, or different grades of Polyethylene glycol ethers (e.g. Ethylene glycol monomethyl ether, Ethylene glycol monoethyl ether, Ethylene glycol monopropyl ether, Ethylene glycol monoisopropyl ether, Ethylene glycol monobutyl ether, Ethylene glycol monophenyl ether, Ethylene glycol monobenzyl ether, Diethylene glycol monomethyl ether, Diethylene glycol monoethyl ether, Diethylene glycol monopropyl ether, Diethylene glycol monoisopropyl ether, Diethylene glycol monobutyl ether, Diethylene glycol monophenyl ether, Diethylene glycol monobenzyl ether, Triethylene glycol monomethyl ether, Triethylene glycol monoethyl ether, Triethylene glycol monopropyl ether, Triethylene glycol monoisopropyl ether, Triethylene glycol monobutyl ether, Triethylene glycol monophenyl ether, Triethylene glycol monobenzyl ether),

    ◦ different grades of Polypropylene glycol ethers (e.g. Propylene glycol monomethyl ether, Propylene glycol monoethyl ether, Propylene glycol monopropyl ether, Propylene glycol monoisopropyl ether, Propylene glycol monobutyl ether, Propylene glycol monophenyl ether, Propylene glycol monobenzyl ether, Dipropylene glycol monomethyl ether, Dipropylene glycol monoethyl ether, Dipropylene glycol monopropyl ether, Dipropylene glycol monoisopropyl ether, Dipropylene glycol monobutyl ether, Dipropylene glycol monophenyl ether, Dipropylene glycol monobenzyl ether, Tripropylene glycol monomethyl ether, Tripropylene glycol monoethyl ether, Tripropylene glycol monopropyl ether, Tripropylene glycol monoisopropyl ether, Tripropylene glycol monobutyl ether, Tripropylene glycol monophenyl ether, Tripropylene glycol monobenzyl ether)

    ◦ anisole, phenetole

    ◦ different molecular weight grades of dimethyl polyethylene glycol, different molecular weight grades of dimethyl polypropylene glycol,

- ketones (such as acetone, methyl ethyl ketone, methyl isobutyl ketone, cyclopentanone, cyclohexanone, cycloheptanone, acetophenone, propiophenone),

- esters (also including methylated fats and oils such as rapeseed oil methyl ester, soybean oil methyl ester, coconut oil methyl ester, 2-ethyl hexyl palmitate, 2-ethyl hexyl stearate), such as butyl propionate, pentyl propionate, methyl hexanoate, methyl octanoate, methyl decanoate, 2-ethyl-hexyl acetate, benzyl acetate, cyclohexyl acetate, isobornyl acetate, benzyl benzoate, butyl benzoate, isopropyl benzoate,

- di/triesters such as dimethyl succinate, dimethyl glutarate, dimethyl adipate, diisopropyl adipate, dibutyl adipate, Benzyl-2-ethylhexyl adipate, dimethyl 2-methyl glutarate, monoacetin, diacetin, triacetin, trimethyl citrate, triethyl citrate, triethyl acetyl citrate, tributyl citrate, tributyl acetyl citrate, as well as mixtures and blends thereof

- lactate esters, such as methyl lactate, ethyl lactate, propyl lactate, butyl lactate, 2-ethyl hexyl lactate

- (poly)ethers such as different molecular weight grades of polyethylene glycol, different molecular weight grades of polypropylene glycol

- unsubstituted and substituted amines
- amides (such as dimethylformamide, or N,N-dimethyl lactamide, or N-formyl morpholine, or fatty acid amides such N,N-dimethyl decanamide or N,N-dimethyl dec-9-en-amide) and esters thereof such as methyl 6-(dimethylamino)-2-methyl-6-oxo-hexanoate
- lactams (such as 2-pyrrolidone, or N-alkylpyrrolidones, such as N-methylpyrrolidone, or N-butylpyrrolidone, or N-octylpyrrolidone, or N-dodecylpyrrolidone or N-methyl caprolactam, N-alkyl caprolactam)
- lactones (such as gamma-butyrolactone, gamma-valerolactone, delta-valerolactone, or alphamethyl gamma-butyrolactone
- sulfones and sulfoxides (such as dimethyl sulfoxide),
- oils of vegetable or animal origin such as sunflower oil, rapeseed oil, corn oil
- nitriles, such as linear or cyclic alkyl nitriles, in particular acetonitrile, cyclohexane carbonitrile, octanonitrile, dodecanonitrile.
- linear and cyclic carbonates, such as dimethyl carbonate, diethyl carbonate, dipropyl carbonate, diisopropyl carbonate, dibutyl carbonate and isomers thereof, diphenyl carbonate, ethylene carbonate, trimethylene carbonate, propylene carbonate, glycerol carbonate, butylene carbonate, pentylene carbonate, hexylene carbonate and octylene carbonate.
- phosphates, such as triethyl phosphate, tributyl phosphate, triisobutyl phosphate, trioctyl phosphate, tris(2-ethyl hexyl) phosphate
- white mineral oils
- mixtures of the any of the above such as,
    - ester mixtures such as Rhodiasolv RPDE,
    - mixtures of morpholine derivatives and cyclic carbonates such as Armid FMPC
    - mixtures of dimethyl sulfoxide with esters and/or with glycerine derivatives

Most preferred carrier is water.

Further adjuvants and auxiliaries i)

As pointed out above, further adjuvants and auxiliaries component i) may be present, selected from adhesives, stickers, colorants, antioxidants, light stabilizers, in particular UV stabilizers, other agents which improve chemical and/or physical stability, butylhydroxytoluene [3.5-Di-tert-butyl-4-hydroxytoluol, CAS-No. 128-37-0], fragrances, protective colloids, binders, penetrants, retention promoters, stabilizers, sequestrants, complexing agents, humectants, spreaders/wetting agents and gibberellins.

Suitable penetrants in the present context are all those substances which are usually used for improving the penetration of agrochemical active compounds into plants. Penetrants are defined in this context by their ability to penetrate from the (generally aqueous) application liquor and/or from the spray coating into the cuticle of the plant and hence increase the mobility of the active compounds in the cuticle. The method described in the literature (Baur et al., 1997, Pesticide Science 51, 131-152) can be used for determining this property. Examples include alcohol alkoxylates such as coconut fatty ethoxylate (10) or isotridecyl ethoxylate (12), fatty acid esters, for example rapeseed oil methyl ester or soya oil methyl ester, fatty amine alkoxylates, for example tallowamine ethoxylate (15), or ammonium and/or phosphonium salts, for example ammonium sulfate or diammonium hydrogenphosphate.

Suitable penetration enhancers by way of example are:

- ethoxylated linear and/or branched fatty alcohols (e.g. Genapol® X-type of Clariant) with 2-20 EO units;

- methyl end-capped, ethoxylated linear and/or branched fatty alcohols (e.g. Genapol® XM-type of Clariant) comprising 2-20 EO units;
- ethoxylated coconut alcohols (e.g. Genapol® C-types of Clariant) comprising 2-20 EO units;
- ethoxylated C12/15 alcohols (e.g. Synperonic® A-types of Croda) comprising 2-20 EO units;
- propoxy-ethoxylated alcohols, branched or linear, e.g. Antarox® B/848 of Solvay, Atlas® G5000 of Croda, Lucramul® HOT 5902 of Levaco, Break-Thru Vibrant of Evonik;
- propoxy-ethoxylated fatty acids, Me end-capped, e.g. Leofat® OC0503M of Lion;
- alkyl ether citrate surfactants (e.g. Adsee CE range, Akzo Nobel);
- alkylpolysaccharides (e.g. Agnique® PG8107, PG8105 of BASF; Atplus® 438, AL-2559, AL-2575 of Croda);
- ethoxylated mono- or diesters of glycerine comprising fatty acids with 8-18 carbon atoms and an average of 10-40 EO units (e.g. Crovol® product range of Croda);
- castor oil ethoxylates comprising an average of 5-40 EO units (e.g. Berol® range of Nouryon, Emulsogen® EL range of Clariant);
- block-copolymer of polyethylene oxide and polypropylene oxide (e.g. Pluronic range of BASF).
- Oils that function as penetration promoters are all oils of vegetable, mineral and animal origin which can customarily be employed in agrochemical agents. Examples are:
    - sunflower oil, rapeseed oil, corn oil, soybean oil, rice bran oil, olive oil;
    - sunflower oil methyl ester, rapeseed oil methyl ester, corn oil methyl ester, soybean oil methyl ester, rice bran oil methyl ester, olive oil methyl ester
    - linear and/or branched alkyl esters of C10-C24 saturated fatty acids of vegetable or mineral origin: e.g. methyl, ethyl, propyl, butyl, pentyl, hexyl, isopropyl, isobutyl, isopentyl, 2-ethyl hexyl esters of capric acid, undecylic acid, lauric acid, tridecylic acid, myristic acid, pentadecylic acid, palmitic acid, margaric acid, stearic acid, nonadecylic acid, arachidic acid, heneicosylic acid, behenic acid, tricosylic acid, lignoceric acid.
    - linear and/or branched alkyl esters of C10-C24 usaturated fatty acids of vegetable or mineral origin: e.g. methyl, ethyl, propyl, butyl, pentyl, hexyl, isopropyl, isobutyl, isopentyl, 2-ethyl hexyl esters of α-Linolenic acid, linoleic acid, linolelaidic acid, palmitoleic acid, oleic acid, erucic acid.
    - white paraffinic mineral oils such as the Catenex®, Exxsol® ranges of Shell.
    - mixtures of two or more of the above

Useful retention promoters include all those substances which reduce dynamic surface tension, for example dioctyl sulfosuccinate, or increase viscoelasticity, for example hydroxypropylguar polymers.
Suitable wetting agents, spreading agents and/or retention agents by way of example are:

- ethoxylated branched alcohols (e.g. Genapol® X-type) with 2-20 EO units;
- methyl end-capped, ethoxylated branched alcohols (e.g. Genapol® XM-type) comprising 2-20 EO units;
- propoxy-ethoxylated alcohols, branched or linear, e.g. Antarox® B/848, Atlas® G5000, Lucramul® HOT 5902;
- organomodified polysiloxanes, e.g. BreakThru® OE444, BreakThru® S240, Silwett® L77, Silwet 312, Silwett® 408, Silwet® 806;

- mono-and diesters of sulfosuccinate Na salts with branched or linear alcohols comprising 1-10 carbon atoms, e.g. Geropon DOS;

- ethoxylated diacetylene-diols, e.g. Surfynol® 4xx-range;

In particular for the treatment of seeds, often colorants are used.

Colorants which may be present in the seed-dressing formulations which can be used in accordance with the invention are all colorants which are customary for such purposes. It is possible to use either pigments, which are sparingly soluble in water, or dyes, which are soluble in water. Examples include the dyes known by the names Rhodamine B ([9-(2-carboxyphenyl)-6-(diethylamino)xanthen-3-ylidene]-diethylazanium;chloride), C.I. Pigment Red 112 (3-hydroxy-N-(2-methylphenyl)-4-[(2,4,5-trichlorophenyl)diazenyl]naphthalene-2-carboxamide) and C.I. Solvent Red 1 (1-[(2-methoxyphenyl)diazenyl]naphthalen-2-ol).

Useful wetting agents which may be present in the seed dressing formulations usable in accordance with the invention are all substances which promote wetting and which are conventionally used for the formulation of agrochemically active compounds. Preference is given to using alkylnaphthalenesulphonates, such as diisopropyl- or diisobutylnaphthalenesulphonates.

Adhesives which may be present preferably in the seed dressing formulations usable in accordance with the invention are all customary binders usable in seed dressing products. Polyvinylpyrrolidone, polyvinyl acetate, polyvinyl alcohol, acrylic, styrene butadiene polymers and tylose may be mentioned as being preferred.

Gibberellins which can be present preferably in the seed-dressing formulations which can be used in accordance with the invention are preferably the gibberellins A1, A3 (= gibberellic acid), A4 and A7; gibberellic acid is especially preferably used. The gibberellins are known (cf. R. Wegler "Chemie der Pflanzenschutz- and Schädlingsbekämpfungsmittel", vol. 2, Springer Verlag, 1970, pp. 401-412).

Further active substances k)

The active compounds identified here by their common names are known and are described, for example, in the pesticide handbook ("The Pesticide Manual" 16th Ed., British Crop Protection Council 2012) or can be found on the Internet (e.g. http://www.alanwood.net/pesticides). The classification is based on the current IRAC Mode of Action Classification Scheme at the time of filing of this patent application.

In one preferred embodiment the one or more further active substance is selected from the group of insecticides/acaricides and nematicides.

Preferably those are selected from:

(1) Acetylcholinesterase (AChE) inhibitors, preferably carbamates selected from alanycarb, aldicarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, triazamate, trimethacarb, XMC and xylylcarb, or organophosphates selected from acephate, azamethiphos, azinphos-ethyl, azinphos-methyl, cadusafos, chlorethoxyfos, chlorfenvinphos, chlormephos, chlorpyrifos-methyl, coumaphos, cyanophos, demeton-S-methyl, diazinon, dichlorvos/DDVP, dicrotophos, dimethoate, dimethylvinphos, disulfoton, EPN, ethion, ethoprophos, famphur, fenamiphos, fenitrothion, fenthion, fosthiazate, heptenophos, imicyafos, isofenphos, isopropyl O-(methoxyaminothiophosphoryl) salicylate, isoxathion, malathion, mecarbam, methamidophos, methidathion, mevinphos, monocrotophos, naled, omethoate, oxydemeton-methyl, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, triclorfon and vamidothion.

(2) GABA-gated chloride channel blockers, preferably cyclodiene-organochlorines selected from chlordane and endosulfan, or phenylpyrazoles (fiproles) selected from ethiprole and fipronil.

(3) Sodium channel modulators, preferably pyrethroids selected from acrinathrin, allethrin, d-cis-trans allethrin, d-trans allethrin, bifenthrin, bioallethrin, bioallethrin s-cyclopentenyl isomer, bioresmethrin, cycloprothrin, cyfluthrin, beta-cyfluthrin, cyhalothrin, lambda-cyhalothrin, gamma-cyhalothrin, cypermethrin, alpha-cypermethrin, beta-cypermethrin, theta-cypermethrin, zeta-cypermethrin, cyphenothrin [(1R)-trans-isomer], deltamethrin, empenthrin [(EZ)-(1R)-isomer], esfenvalerate, etofenprox, fenpropathrin, fenvalerate, flucythrinate, flumethrin, tau-fluvalinate, halfenprox, imiprothrin, kadethrin, momfluorothrin, permethrin, phenothrin [(1R)-trans-isomer], prallethrin, pyrethrins (pyrethrum), resmethrin, silafluofen, tefluthrin, tetramethrin, tetramethrin [(1R)- isomer)], tralomethrin and transfluthrin, or DDT or methoxychlor.

(4) Nicotinic acetylcholine receptor (nAChR) competitive modulators, preferably neonicotinoids selected from acetamiprid, clothianidin, dinotefuran, imidacloprid, nitenpyram, thiacloprid and thiamethoxam, or nicotine, or sulfoximines selected from sulfoxaflor, or butenolids selected from flupyradifurone, or mesoionics selected from triflumezopyrim.

(5) Nicotinic acetylcholine receptor (nAChR) allosteric modulators (Site I), preferably spinosyns selected from spinetoram and spinosad.

(6) Glutamate-gated chloride channel (GluCl) allosteric modulators, preferably avermectins/milbemycins selected from abamectin, emamectin benzoate, lepimectin and milbemectin.

(7) Juvenile hormone mimics, preferably juvenile hormone analogues selected from hydroprene, kinoprene and methoprene, or fenoxycarb or pyriproxyfen.

(8) Miscellaneous non-specific (multi-site) inhibitors, preferably alkyl halides selected from methyl bromide and other alkyl halides, or chloropicrine or sulphuryl fluoride or borax or tartar emetic or methyl isocyanate generators selected from diazomet and metam.

(9) Chordotonal organ TRPV channel modulators, preferably pyridine azomethanes selected from pymetrozine and pyrifluquinazone, or pyropenes selected from afidopyropen.

(10) Mite growth inhibitors affecting CHS1 selected from clofentezine, hexythiazox, diflovidazin and etoxazole.

(11) Microbial disruptors of the insect gut membranes selected from *Bacillus thuringiensis* subspecies *israelensis, Bacillus sphaericus, Bacillus thuringiensis* subspecies *aizawai, Bacillus thuringiensis* subspecies *kurstaki, Bacillus thuringiensis* subspecies *tenebrionis,* and *B.t.* plant proteins selected from Cry1Ab, Cry1Ac, Cry1Fa, Cry1A.105, Cry2Ab, Vip3A, mCry3A, Cry3Ab, Cry3Bb and Cry34Ab1/35Ab1.

(12) Inhibitors of mitochondrial ATP synthase, preferably ATP disruptors selected from diafenthiuron, or organotin compounds selected from azocyclotin, cyhexatin and fenbutatin oxide, or propargite or tetradifon.

(13) Uncouplers of oxidative phosphorylation via disruption of the proton gradient selected from chlorfenapyr, DNOC and sulfluramid.

(14) Nicotinic acetylcholine receptor channel blockers selected from bensultap, cartap hydrochloride, thiocylam and thiosultap-sodium.

(15) Inhibitors of chitin biosynthesis affecting CHS1, preferably benzoylureas selected from bistrifluron, chlorfluazuron, diflubenzuron, flucycloxuron, flufenoxuron, hexaflumuron, lufenuron, novaluron, noviflumuron, teflubenzuron and triflumuron.

(16) Inhibitors of chitin biosynthesis, type 1 selected from buprofezin.

(17) Moulting disruptor (in particular for Diptera, i.e. dipterans) selected from cyromazine.

(18) Ecdysone receptor agonists, preferably diacylhydrazines selected from chromafenozide, halofenozide, methoxyfenozide and tebufenozide.

(19) Octopamine receptor agonists selected from amitraz.

(20) Mitochondrial complex III electron transport inhibitors selected from hydramethylnone, acequinocyl, fluacrypyrim and bifenazate.

(21) Mitochondrial complex I electron transport inhibitors, preferably METI acaricides and insecticides selected from fenazaquin, fenpyroximate, pyrimidifen, pyridaben, tebufenpyrad and tolfenpyrad, or rotenone (Derris).

(22) Voltage-dependent sodium channel blockers, preferably oxadiazines selected from indoxacarb, or semicarbazones selected from metaflumizone.

(23) Inhibitors of acetyl CoA carboxylase, preferably tetronic and tetramic acid derivatives selected from spirodiclofen, spiromesifen, spiropidion and spirotetramat.

(24) Mitochondrial complex IV electron transport inhibitors, preferably phosphides selected from aluminium phosphide, calcium phosphide, phosphine and zinc phosphide, or cyanides selected from calcium cyanide, potassium cyanide and sodium cyanide.

(25) Mitochondrial complex II electron transport inhibitors, preferably *beta*-ketonitrile derivatives selected from cyenopyrafen and cyflumetofen, or carboxanilides selected from pyflubumide.

(28) Ryanodine receptor modulators, preferably diamides selected from chlorantraniliprole, cyantraniliprole, cyclaniliprole, flubendiamide and tetraniliprole.

(29) Chordotonal organ Modulators (with undefined target site) selected from flonicamid.

(30) GABA-gated chlorid channel allosteric modulators, preferably meta-diamides selected from broflanilide, or isoxazoles selected from fluxametamide.

(31) Baculoviruses, preferably Granuloviruses (GVs) selected from *Cydia pomonella* GV and *Thaumatotibia leucotreta* (GV), or Nucleopolyhedroviruses (NPVs) selected from *Anticarsia gemmatalis* MNPV, Flucypyriprole and *Helicoverpa armigera* NPV.

(32) Nicotinic acetylcholine receptor allosteric modulators (Site II) selected from GS-omega/kappa HXTX-Hvla peptide.

(33) further active compounds selected from Acynonapyr, Afoxolaner, Azadirachtin, Benclothiaz, Benzoximate, Benzpyrimoxan, Bromopropylate, Chinomethionat, Chloroprallethrin, Cryolite, Cyclobutrifluram, Cycloxaprid, Cyetpyrafen, Cyhalodiamide, Cyproflanilide (CAS 2375110-88-4), Dicloromezotiaz, Dicofol, Dimpropyridaz, epsilon-Metofluthrin, epsilon-Momfluthrin, Flometoquin, Fluazaindolizine, Flucypyriprole (CAS 1771741-86-6), Fluensulfone, Flufenerim, Flufenoxystrobin, Flufiprole, Fluhexafon, Fluopyram, Flupyrimin. Fluralaner, Fufenozide, Flupentiofenox, Guadipyr, Heptafluthrin, Imidaclothiz, Iprodione, Isocycloseram, kappa-Bifenthrin, kappa-Tefluthrin, Lotilaner, Meperfluthrin, Nicofluprole (CAS 1771741-86-6), Oxazosulfyl, Paichongding, Pyridalyl, Pyrifluquinazon, Pyriminostrobin, Sarolaner, Spidoxamat, Spirobudiclofen, Tetramethylfluthrin, Tetrachlorantraniliprole, Tigolaner, Tioxazafen, Thiofluoximate, Tyclopyrazoflor, Iodomethane; furthermore preparations based on *Bacillus firmus* (I-1582, Votivo) and azadirachtin (BioNeem), and also the following compounds: 1-{2-fluoro-4-methyl-5-[(2,2,2-trifluoroethyl)sulphinyl]phenyl}-3-(trifluoromethyl)-1H-1,2,4-triazole-5-amine (known from WO2006/043635) (CAS 885026-50-6), 2-chloro-N-[2-{1-[(2E)-3-(4-chlorophenyl)prop-2-en-1-yl]piperidin-4-yl}-4-(trifluoromethyl)phenyl]isonicotinamide (known from WO2006/003494) (CAS 872999-66-1), 3-(4-chloro-2,6-dimethylphenyl)-4-hydroxy-8-methoxy-1,8-diazaspiro[4.5]dec-3-en-2-one (known from WO 2010052161) (CAS 1225292-17-0), 3-(4-chloro-2,6-dimethylphenyl)-8-methoxy-2-oxo-1,8-diazaspiro[4.5]dec-3-en-4-yl ethyl carbonate (known from EP2647626) (CAS 1440516-42-6), PF1364 (known from JP2010/018586) (CAS 1204776-60-2), (3*E*)-3-[1-[(6-chloro-3-pyridyl)methyl]-2-pyridylidene]-1,1,1-trifluoro-propan-2-one (known from WO2013/144213) (CAS 1461743-15-6), *N*-[3-(benzylcarbamoyl)-4-chlorophenyl]-1-methyl-3-(pentafluoroethyl)-4-(trifluoromethyl)-1*H*-pyrazole-5-carboxamide (known from WO2010/051926) (CAS 1226889-14-0), 5-bromo-4-chloro-*N*-[4-chloro-2-methyl-6-(methylcarbamoyl)phenyl]-2-(3-chloro-2-pyridyl)pyrazole-3-carboxamide (known from CN103232431) (CAS 1449220-44-3), 4-[5-(3,5-dichlorophenyl)-4,5-dihydro-5-(trifluoromethyl)-3-isoxazolyl]-2-methyl-*N*-(*cis*-1-oxido-3-thietanyl)-benzamide, 4-[5-(3,5-dichlorophenyl)-4,5-dihydro-5-(trifluoromethyl)-3-isoxazolyl]-2-methyl-*N*-(*trans*-1-oxido-3-thietanyl)-benzamide and 4-[(5*S*)-5-(3,5-dichlorophenyl)-4,5-dihydro-5-(trifluoromethyl)-3-isoxazolyl]-2-methyl-*N*-(*cis*-1-oxido-3-thietanyl) benzamide (known from WO 2013/050317 A1) (CAS 1332628-83-7), *N*-[3-chloro-1-(3-pyridinyl)-1*H*-pyrazol-4-yl]-*N*-ethyl-3-[(3,3,3-trifluoropropyl)sulfinyl]-propanamide, (+)-*N*-[3-chloro-1-(3-pyridinyl)-1*H*-pyrazol-4-yl]-*N*-ethyl-3-[(3,3,3-trifluoropropyl)sulfinyl]-propanamide and (-)-*N*-[3-chloro-1-(3-pyridinyl)-1*H*-pyrazol-4-yl]-*N*-ethyl-3-[(3,3,3-trifluoropropyl)sulfinyl]-propanamide (known from WO 2013/162715 A2, WO 2013/162716 A2, US 2014/0213448 A1) (CAS 1477923-37-7), 5-[[(2*E*)-3-chloro-2-propen-1-yl]amino]-1-[2,6-dichloro-4-(trifluoromethyl)phenyl]-4-[(trifluoromethyl)sulfinyl]-1*H*-pyrazole-3-carbonitrile (known from CN 101337937 A) (CAS 1105672-77-2), 3-bromo-*N*-[4-chloro-2-methyl-6-[(methylamino)thioxomethyl] phenyl]-1-(3-chloro-2-pyridinyl)-1*H*-pyrazole-5-carboxamide, (Liudaibenjiaxuanan, known from CN 103109816 A) (CAS 1232543-85-9); *N*-[4-chloro-2-[[(1,1-dimethylethyl)amino]carbonyl]-6-methylphenyl]-1-(3-chloro-2-pyridinyl)-3-(fluoromethoxy)-1*H*-pyrazole-5-carboxamide (known from WO 2012/034403 A1) (CAS 1268277-22-0),

*N*-[2-(5-amino-1,3, 4-thiadiazol-2-yl)-4-chloro-6-methylphenyl]-3-bromo-1-(3-chloro-2-pyridinyl)-1*H*-pyrazole-5-carboxamide (known from WO 2011/085575 A1) (CAS 1233882-22-8), 4-[3-[2,6-dichloro-4-[(3,3-dichloro-2-propen-1-yl)oxy]phenoxy]propoxy]-2-methoxy-6-(trifluoromethyl)-pyrimidine (known from CN 101337940 A) (CAS 1108184-52-6); (2E)- and 2(*Z*)-2-[2-(4-cyanophenyl)-1-[3-(trifluoromethyl) phenyl]ethylidene]-*N*-[4-(difluoromethoxy)phenyl]-hydrazinecarboxamide (known from CN 101715774 A) (CAS 1232543-85-9); 3-(2,2-dichloroethenyl)-2,2-dimethyl-4-(1*H*-benzimidazol-2-yl)phenyl-cyclopropanecarboxylic acid ester (known from CN 103524422 A) (CAS 1542271-46-4); (4a*S*) -7-chloro-2,5-dihydro-2-[[(methoxycarbonyl)[4-[(trifluoromethyl)thio]phenyl]amino]carbonyl]-indeno[1,2-e][1,3,4]oxadiazine-4a(3*H*)-carboxylic acid methyl ester (known from CN 102391261 A) (CAS 1370358-69-2); 6-deoxy-3-O-ethyl-2,4-di-O-methyl-, 1-[*N*-[4-[1-[4-(1,1,2,2,2-pentafluoroethoxy) phenyl]-1*H*-1,2,4-triazol-3-yl]phenyl]carbamate]-α-L-mannopyranose (known from US 2014/0275503 A1) (CAS 1181213-14-8); 8-(2-cyclopropylmethoxy-4-trifluoromethyl-phenoxy)-3-(6-trifluoromethyl-pyridazin-3-yl)-3-aza-bicyclo[3.2.1 ]octane (CAS 1253850-56-4), (8-*anti*)-8-(2-cyclopropylmethoxy-4-trifluoromethyl-phenoxy)-3-(6-trifluoromethyl-pyridazin-3-yl)-3-aza-bicyclo[3.2.1]octane (CAS 933798-27-7), (8-*syn*)-8-(2-cyclopropylmethoxy-4-trifluoromethyl-phenoxy) -3-(6-trifluoromethyl-pyridazin-3-yl)-3-aza-bicyclo[3.2.1]octane (known from WO 2007040280 A1, WO 2007040282 A1) (CAS 934001-66-8), *N*-[4-(aminothioxomethyl)-2-methyl-6-[(methylamino)carbonyl]phenyl]-3-bromo-1-(3-chloro-2-pyridinyl)-1*H*-pyrazole-5-carboxamide (known from CN 103265527 A) (CAS 1452877-50-7), 3-(4-chloro-2,6-dimethylphenyl)-8-methoxy-1-methyl-1,8-diazaspiro[4.5]decane-2,4-dione (known from WO 2014/187846 A1) (CAS 1638765-58-8), 3-(4-chloro-2,6-dimethylphenyl)-8-methoxy-1-methyl-2-oxo-1,8-diazaspiro[4.5]dec-3-en-4-yl-carbonic acid ethyl ester (known from WO 2010/066780 A1, WO 2011151146 A1) (CAS 1229023-00-0), *N*-[1-(2,6-difluorophenyl)-1H-pyrazol-3-yl]-2-(trifluoromethyl)benzamide (known from WO 2014/053450 A1) (CAS 1594624-87-9), N-[2-(2,6-difluorophenyl)-2H-1,2,3-triazol-4-yl]-2-(trifluoromethyl)benzamide (known from WO 2014/053450 A1) (CAS 1594637-65-6), N-[1-(3,5-difluoro-2-pyridinyl)-1H-pyrazol-3-yl]-2-(trifluoromethyl)benzamide (known from WO 2014/053450 A1) (CAS 1594626-19-3), (3*R*)-3-(2-chloro-5-thiazolyl)-2,3-dihydro-8-methyl-5,7-dioxo-6-phenyl-5H-thiazolo[3,2-a]pyrimidinium inner salt (known from WO 2018/177970 A1) (CAS 2246757-58-2); 3-(2-chloro-5-thiazolyl)-2,3-dihydro-8-methyl-5,7-dioxo-6-phenyl-5*H*-thiazolo[3,2-a]pyrimidinium inner salt (known from WO 2018/177970 A1) (CAS 2246757-56-0); *N*-[3-chloro-1-(3-pyridinyl)-1*H*-pyrazol-4-yl]-2-(methylsulfonyl)-propanamide (known from WO 2019/236274 A1) (CAS 2396747-83-2), N-[2-bromo-4-[1,2,2,2-tetrafluoro-1-(trifluoromethyl)ethyl]-6-(trifluoromethyl)phenyl]-2-fluoro-3-[(4-fluorobenzoyl)amino]-benzamide (known from WO 2019059412 A1) (CAS 1207977-87-4), 3-Bromo-1-(3-chloro-2-pyridinyl)-N-[4,6-dichloro-3-fluoro-2-[(methylamino)carbonyl]phenyl]-1H-Pyrazole-5-carboxamide (Fluchlorodiamide; known from CN110835330 A, CN106977494 A) (CAS: 2129147-03-9).

In another preferred embodiment, said one or more further active substance is a fungicide which is preferably selected from

1) Inhibitors of the ergosterol biosynthesis, for example (1.001) cyproconazole, (1.002) difenoconazole, (1.003) epoxiconazole, (1.004) fenbuconazole, (1.005) fenhexamid, (1.006) fenpropidin, (1.007) fenpropimorph, (1.008) fenpyrazamine, (1.009) fluquinconazole, (1.010) flutriafol, (1.011) hexaconazole, (1.012) imazalil, (1.013) imazalil sulfate, (1.014) ipconazole, (1.015) ipfentrifluconazole, (1.016) mefentrifluconazole, (1.017) metconazole, (1.018) myclobutanil, (1.019) paclobutrazol, (1.020) penconazole, (1.021) prochloraz, (1.022) propiconazole, (1.023) prothioconazole, (1.024) pyrisoxazole, (1.025) spiroxamine, (1.026) tebuconazole, (1.027) tetraconazole, (1.028) triadimenol, (1.029) tridemorph, (1.030) triticonazole, (1.031) (1R,2S,SS)-5-(4-chlorobenzyl)-2-(chloromethyl)-2-methyl-1-(1H-1,2,4-triazol-1-ylmethyl)cyclopentanol, (1.032) (1S,2R,5R)-5-(4-chlorobenzyl)-2-(chloromethyl)-2-methyl-1-(1H-1,2,4-triazol-1-ylmethyl)cyclopentanol, (1.033) (2R)-2-(1-chlorocyclopropyl)-4-[(1R)-2,2-dichlorocyclopropyl]-1-(1H-1,2,4-triazol-1-yl)butan-2-ol, (1.034) (2R)-2-(1-chlorocyclopropyl)-4-[(1S)-2,2-dichlorocyclopropyl]-1-(1H-1,2,4-triazol-1-yl)butan-2-ol, (1.035) (2R)-2-[4-(4-chlorophenoxy)-2-(trifluoromethyl)phenyl]-1-(1H-1,2,4-triazol-1-yl)propan-2-ol, (1.036) (2S)-2-(1-chlorocyclopropyl)-4-[(1R)-2,2-dichlorocyclopropyl]-1-(1H-1,2,4-triazol-1-yl)butan-2-ol, (1.037) (2S)-2-(1-chlorocyclopropyl)-4-[(1S)-2,2-dichlorocyclopropyl]-1-(1H-1,2,4-triazol-1-yl)butan-2-ol, (1.038) (2S)-2-[4-(4-chlorophenoxy)-2-(trifluoromethyl)phenyl]-1-(1H-1,2,4-triazol-1-yl)propan-2-ol, (1.039) (R)-[3-(4-chloro-2-fluorophenyl)-5-(2,4-difluorophenyl)-1,2-oxazol-4-yl](pyridin-3-yl)methanol, (1.040) (S)-[3-(4-chloro-2-fluorophenyl)-5-(2,4-difluorophenyl)-1,2-oxazol-4-yl](pyridin-3-yl)methanol, (1.041) [3-(4-chloro-2-fluorophenyl)-5-(2,4-difluorophenyl)-1,2-oxazol-4-yl](pyridin-3-yl)methanol, (1.042) 1-({(2R,4S)-2-[2-chloro-4-(4-chlorophenoxy)phenyl]-4-methyl-1,3-dioxolan-2-yl}methyl)-1H-1,2,4-triazole, (1.043) 1-({(2S,4S)-2-[2-chloro-4-(4-chlorophenoxy)phenyl]-4-methyl-1,3-dioxolan-2-yl}methyl)-1H-1,2,4-triazole, (1.044) 1-{[3-(2-chlorophenyl)-2-(2,4-difluorophenyl)oxiran-2-yl]methyl}-1H-1,2,4-triazol-5-yl thiocyanate, (1.045) 1-{[rel(2R,3R)-3-(2-chlorophenyl)-2-(2,4-difluorophenyl)oxiran-2-yl]methyl}-1H-1,2,4-triazol-5-yl thiocyanate, (1.046) 1-{[rel(2R,3S)-3-(2-chlorophenyl)-2-(2,4-difluorophenyl)oxiran-2-yl]methyl}-1H-1,2,4-triazol-5-yl thiocyanate, (1.047) 2-[(2R,4R,5R)-1-(2,4-dichlorophenyl)-5-hydroxy-2,6,6-trimethyl-heptan-4-yl]-2,4-dihydro-3H-1,2,4-triazole-3-thione, (1.048) 2-[(2R,4R,5S)-1-(2,4-dichlorophenyl)-5-hydroxy-2,6,6-trimethylheptan-4-yl]-2,4-dihydro-3H-1,2,4-triazole-3-thione, (1.049) 2-[(2R,4S,5R)-1-(2,4-dichlorophenyl)-5-hydroxy-2,6,6-trimethylheptan-4-yl]-2,4-dihydro-3H-1,2,4-triazole-3-thione, (1.050) 2-[(2R,4S,5S)-1-(2,4-dichlorophenyl)-5-hydroxy-2,6,6-trimethylheptan-4-yl]-2,4-dihydro-3H-1,2,4-triazole-3-thione, (1.051) 2-[(2S,4R,5R)-1-(2,4-dichlorophenyl)-5-hydroxy-2,6,6-trimethyl-heptan-4-yl]-2,4-dihydro-3H-1,2,4-triazole-3-thione, (1.052) 2-[(2S,4R,5S)-1-(2,4-dichlorophenyl)-5-hydroxy-2,6,6-trimethylheptan-4-yl]-2,4-dihydro-3H-1,2,4-triazole-3-thione, (1.053) 2-[(25,4S,5R)-1-(2,4-dichlorophenyl)-5-hydroxy-2,6,6-trimethylheptan-4-yl]-2,4-dihydro-3H-1,2,4-triazole-3-thione, (1.054) 2-[(2S,4S,5S)-1-(2,4-dichlorophenyl)-5-hydroxy-2,6,6-trimethylheptan-4-yl]-2,4-dihydro-3H-1,2,4-triazole-3-thione, (1.055) 2-[1-(2,4-dichlorophenyl)-5-hydroxy-2,6,6-trimethylheptan-4-yl]-2,4-dihydro-3H-1,2,4-triazole-3-thione, (1.056) 2-[6-(4-bromophenoxy)-2-(trifluoromethyl)-3-pyridyl]-1-(1,2,4-triazol-1-yl)propan-2-ol, (1.057) 2-[6-(4-chlorophenoxy)-2-(trifluoromethyl)-3-pyridyl]-1-(1,2,4-triazol-1-yl)propan-2-ol, (1.058) 2-{[3-(2-chlorophenyl)-2-(2,4-difluorophenyl)oxiran-2-yl]methyl}-2,4-dihydro-3H-1,2,4-triazole-3-thione, (1.059) 2-{[rel(2R,3R)-3-(2-chlorophenyl)-2-(2,4-difluorophenyl)oxiran-2-yl]methyl}-2,4-dihydro-3H-1,2,4-triazole-3-thione, (1.060) 2-{[rel(2R,3S)-3-(2-chlorophenyl)-2-(2,4-difluorophenyl)-oxiran-2-yl]methyl}-2,4-dihydro-3H-1,2,4-triazole-3-thione, (1.061) 3-[2-(1-chlorocyclopropyl)-3-(3-chloro-2-fluoro-phenyl)-2-hydroxy-propyl]imidazole-4-carbonitrile, (1.062) 4-[[6-[rac-(2R)-2-(2,4-difluorophenyl)-1,1-difluoro-2-hydroxy-3-(5-thioxo-4H-1,2,4-triazol-1-yl)propyl]-3-pyridyl]oxy]-benzonitrile, (1.063) 5-(4-chlorobenzyl)-2-(chloromethyl)-2-methyl-1-(1H-1,2,4-triazol-1-ylmethyl)cyclo-pentanol, (1.064) 5-(allylsulfanyl)-1-{[3-(2-chlorophenyl)-2-(2,4-difluorophenyl)oxiran-2-yl]methyl}-1H-1,2,4-triazole, (1.065) 5-(allylsulfanyl)-1-{[rel(2R,3R)-3-(2-chlorophenyl)-2-(2,4-difluorophenyl)oxiran-2-yl]methyl}-1H-1,2,4-triazole, (1.066) 5-(allylsulfanyl)-1-{[rel(2R,3S)-3-(2-chlorophenyl)-2-(2,4-difluoro-phenyl)oxiran-2-yl]methyl}-1H-1,2,4-triazole, (1.067) methyl 2-[2-chloro-4-(4-chlorophenoxy)phenyl]-2-hydroxy-3-(1H-1,2,4-triazol-1-yl)propanoate, (1.068) N'-(2-chloro-5-methyl-4-phenoxyphenyl)-N-ethyl-N-methylimidoformamide, (1.069) N'-[2-chloro-4-(2-fluorophenoxy)-5-methylphenyl]-N-ethyl-N-methy-limidoformamide, (1.070) N'-[5-bromo-6-(2,3-dihydro-1H-inden-2-yloxy)-2-methylpyridin-3-yl]-N-ethyl-N-methylimidoformamide, (1.071) N'-{4-[(4,5-dichloro-1,3-thiazol-2-yl)oxy]-2,5-dimethylphenyl}-N-ethyl-N-methylimidoformamide, (1.072) N'-{5-bromo-2-methyl-6-[(1-propoxypropan-2-yl)oxy]pyridin-3-yl}-N-ethyl-N-methylimidoformamide, (1.073) N'-{5-bromo-6-[(1R)-1-(3,5-difluorophenyl)ethoxy]-2-methyl-pyridin-3-yl}-N-ethyl-N-methylimidoformamide, (1.074) N'-{5-bromo-6-[(1S)-1-(3,5-difluorophenyl)-ethoxy]-2-methylpyridin-3-yl}-N-ethyl-N-methylimidoformamide, (1.075) N'-{5-bromo-6-[(cis-4-isopropylcyclohexyl)oxy]-2-methylpyridin-3-yl}-N-ethyl-N-methylimidoformamide, 1.076) N'-{5-bromo-6-[(trans-4-isopropylcyclohexyl)oxy]-2-methylpyridin-3-yl}-N-ethyl-N-methylimidoformamide, (1.077) N'-{5-bromo-6-[1-(3,5-difluorophenyl)ethoxy]-2-methylpyridin-3-yl}-N-ethyl-N-methylimidoformamide, (1.078) N-isopropyl-N'-[5-methoxy-2-methyl-4-(2,2,2-trifluoro-1-hydroxy-1-phenylethyl)phenyl]-N-methylimidoformamide.

2) Inhibitors of the respiratory chain at complex I or II, for example (2.001) benzovindiflupyr, (2.002) bixafen, (2.003) boscalid, (2.004) carboxin, (2.005) cyclobutrifluram, (2.006) flubeneteram, (2.007) fluindapyr, (2.008) fluopyram, (2.009) flutolanil, (2.010) fluxapyroxad, (2.011) furametpyr, (2.012) inpyrfluxam, (2.013) Isofetamid, (2.014) isoflucypram, (2.015) isopyrazam, (2.016) penflufen, (2.017) penthiopyrad, (2.018) pydiflumetofen, (2.019) pyrapropoyne, (2.020) pyraziflumid, (2.021) sedaxane, (2.022) 1,3-dimethyl-N-(1,1,3-trimethyl-2,3-dihydro-1H-inden-4-yl)-1H-pyrazole-4-carboxamide, (2.023) 1,3-dimethyl-N-[(3R)-1,1,3-trimethyl-2,3-dihydro-1H-inden-4-yl]-1H-pyrazole-4-carboxamide, (2.024) 1,3-dimethyl-N-[(3S)-1,1,3-trimethyl-2,3-dihydro-1H-inden-4-yl]-1H-pyrazole-4-carboxamide, (2.025) 1-methyl-3-(trifluoromethyl)-N-[2'-(trifluoromethyl)biphenyl-2-yl]-1H-pyrazole-4-carboxamide, (2.026) 2-fluoro-6-(trifluoromethyl)-N-(1,1,3-trimethyl-2,3-dihydro-1H-inden-4-yl)benzamide, (2.027) 3-(difluoromethyl)-1-methyl-N-(1,1,3-trimethyl-2,3-dihydro-1H-inden-4-yl)-1H-pyrazole-4-carboxamide, (2.028) 3-(difluoromethyl)-1-methyl-N-[(3S)-1,1,3-trimethyl-2,3-dihydro-1H-inden-4-yl]-1H-pyrazole-4-carboxamide, (2.029) 3-(difluoromethyl)-N-[(3R)-7-fluoro-1,1,3-trimethyl-2,3-dihydro-1H-inden-4-yl]-1-methyl-1H-pyrazole-4-carboxamide, (2.030) 3-(difluoromethyl)-N-[(3S)-7-fluoro-1,1,3-trimethyl-2,3-dihydro-1H-inden-4-yl]-1-methyl-1H-pyrazole-4-carboxamide, (2.031) 5,8-difluoro-N-[2-(2-fluoro-4-{[4-(trifluoromethyl)pyridin-2-yl]oxy}phenyl)ethyl]quinazolin-4-amine, (2.032) N-[(1R,4S)-9-(dichloro-methylene)-1,2,3,4-tetrahydro-1,4-methanonaphthalen-5-yl]-3-(difluoromethyl)-1-methyl-1H-pyrazole-4-carboxamide, (2.033) N-[(1S,4R)-9-(dichloromethylene)-1,2,3,4-tetrahydro-1,4-methanonaphthalen-5-yl]-3-(difluoromethyl)-1-methyl-1H-pyrazole-4-carboxamide, (2.034) N-[1-(2,4-dichlorophenyl)-1-methoxypropan-2-yl]-3-(difluoromethyl)-1-methyl-1H-pyrazole-4-carboxamide, (2.035) N-[rac-(1S,2S)-2-(2,4-dichlorophenyl)cyclobutyl]-2-(trifluoromethyl)nicotinamide.

3) Inhibitors of the respiratory chain at complex III, for example (3.001) ametoctradin, (3.002) amisulbrom, (3.003) azoxystrobin, (3.004) coumethoxystrobin, (3.005) coumoxystrobin, (3.006) cyazofamid, (3.007) dimoxystrobin, (3.008) enoxastrobin, (3.009) famoxadone, (3.010) fenamidone, (3.011) fenpicoxamid, (3.012) florylpicoxamid, (3.013) flufenoxystrobin, (3.014) fluoxastrobin, (3.015) kresoxim-methyl, (3.016) mandestrobin, (3.017) metominostrobin, (3.018) metyltetraprole, (3.019) orysastrobin, (3.020) picoxystrobin, (3.021) pyraclostrobin, (3.022) pyrametostrobin, (3.023) pyraoxystrobin, (3.024) trifloxystrobin, (3.025) (2E)-2-{2-[({[(1E)-1-(3-{[(E)-1-fluoro-2-phenylvinyl]oxy}phenyl)ethylidene]amino}oxy)methyl]phenyl}-2-(methoxyimino)-N-methylacetamide, (3.026) (2E,3Z)-5-{[1-(4-chlorophenyl)-1H-pyrazol-3-yl]oxy}-2-(methoxyimino)-N,3-dimethylpent-3-enamide, (3.027) (2R)-2-{2-[(2,5-dimethylphenoxy)methyl]phenyl}-2-methoxy-N-methylacetamide, (3.028) (2S)-2-{2-[(2,5-dimethylphenoxy)methyl]phenyl}-2-methoxy-N-methylacetamide, (3.029) N-(3-ethyl-3,5,5-trimethylcyclohexyl)-3-formamido-2-hydroxybenzamide, (3.030) (2E,3Z)-5-{[1-(4-chloro-2-fluorophenyl)-1H-pyrazol-3-yl]oxy }-2-(methoxyimino)-N,3-dimethylpent-3-enamide, (3.031) methyl {5-[3-(2,4-dimethylphenyl)-1H-pyrazol-1-yl]-2-methylbenzyl}carbamate.

4) Inhibitors of the mitosis and cell division, for example (4.001) carbendazim, (4.002) diethofencarb, (4.003) ethaboxam, (4.004) fluopicolide, (4.005) fluopimomide, (4.006) metrafenone, (4.007) pencycuron, (4.008) pyridachlometyl, (4.009) pyriofenone (chlazafenone), (4.010) thiabendazole, (4.011) thiophanate-methyl, (4.012) zoxamide, (4.013) 3-chloro-5-(4-chlorophenyl)-4-(2,6-difluorophenyl)-6-methylpyridazine, (4.014) 3-chloro-5-(6-chloropyridin-3-yl)-6-methyl-4-(2,4,6-trifluorophenyl)pyridazine, (4.015) 4-(2-bromo-4-fluorophenyl)-N-(2,6-difluorophenyl)-1,3-dimethyl-1H-pyrazol-5-amine, (4.016) 4-(2-bromo-4-fluorophenyl)-N-(2-bromo-6-fluorophenyl)-1,3-dimethyl-1H-pyrazol-5-amine, (4.017) 4-(2-bromo-4-fluorophenyl)-N-(2-bromophenyl)-1,3-dimethyl-1H-pyrazol-5-amine, (4.018) 4-(2-bromo-4-fluorophenyl)-N-(2-chloro-6-fluorophenyl)-1,3-dimethyl-1H-pyrazol-5-amine, (4.019) 4-(2-bromo-4-fluorophenyl)-N-(2-chlorophenyl)-1,3-dimethyl-1H-pyrazol-5-amine, (4.020) 4-(2-bromo-4-fluorophenyl)-N-(2-fluorophenyl)-1,3-dimethyl-1H-pyrazol-5-amine, (4.021) 4-(2-chloro-4-fluorophenyl)-N-(2,6-difluorophenyl)-1,3-dimethyl-1H-pyrazol-5-amine, (4.022) 4-(2-chloro-4-fluorophenyl)-N-(2-chloro-6-fluorophenyl)-1,3-dimethyl-1H-pyrazol-5-amine, (4.023) 4-(2-chloro-4-fluorophenyl)-N-(2-chlorophenyl)-1,3-dimethyl-1H-pyrazol-5-amine, (4.024) 4-(2-chloro-4-fluorophenyl)-N-(2-fluorophenyl)-1,3-dimethyl-1H-pyrazol-5-amine, (4.025) 4-(4-chlorophenyl)-5-(2,6-difluorophenyl)-3,6-dimethylpyridazine, (4.026) N-(2-bromo-6-fluorophenyl)-4-(2-chloro-4-fluorophenyl)-1,3-dimethyl-1H-pyrazol-5-amine, (4.027) N-(2-bromophenyl)-4-(2-chloro-4-fluorophenyl)-1,3-dimethyl-1H-pyrazol-5-amine, (4.028) N-(4-chloro-2,6-difluorophenyl)-4-(2-chloro-4-fluorophenyl)-1,3-dimethyl-1H-pyrazol-5-amine.

5) Compounds capable to have a multisite action, for example (5.001) bordeaux mixture, (5.002) captafol, (5.003) captan, (5.004) chlorothalonil, (5.005) copper hydroxide, (5.006) copper naphthenate, (5.007) copper oxide, (5.008) copper oxychloride, (5.009) copper(2+) sulfate, (5.010) dithianon, (5.011) dodine, (5.012) folpet, (5.013) mancozeb, (5.014) maneb, (5.015) metiram, (5.016) metiram zinc, (5.017) oxine-copper, (5.018) propineb, (5.019) sulfur and sulfur preparations including calcium polysulfide, (5.020) thiram, (5.021) zineb, (5.022) ziram, (5.023) 6-ethyl-5,7-dioxo-6,7-dihydro-5H-pyrrolo[3',4':5,6][1,4]dithiino[2,3-c][1,2]thiazole-3-carbonitrile.

6) Compounds capable to induce a host defence, for example (6.001) acibenzolar-S-methyl, (6.002) fosetyl-aluminium, (6.003) fosetyl-calcium, (6.004) fosetyl-sodium, (6.005) isotianil, (6.006) phosphorous acid and its salts, (6.007) probenazole, (6.008) tiadinil.

7) Inhibitors of the amino acid and/or protein biosynthesis, for example (7.001) cyprodinil, (7.002) kasugamycin, (7.003) kasugamycin hydrochloride hydrate, (7.004) oxytetracycline, (7.005) pyrimethanil.

8) Inhibitors of the ATP production, for example (8.001) silthiofam.

9) Inhibitors of the cell wall synthesis, for example (9.001) benthiavalicarb, (9.002) dimethomorph, (9.003) flumorph, (9.004) iprovalicarb, (9.005) mandipropamid, (9.006) pyrimorph, (9.007) valifenalate, (9.008) (2E)-3-(4-tert-butylphenyl)-3-(2-chloropyridin-4-yl)-1-(morpholin-4-yl)prop-2-en-1-one, (9.009) (2Z)-3-(4-tert-butylphenyl)-3-(2-chloropyridin-4-yl)-1-(morpholin-4-yl)prop-2-en-1-one.

10) Inhibitors of the lipid synthesis or transport, or membrane synthesis, for example (10.001) fluoxapiprolin, (10.002) natamycin, (10.003) oxathiapiprolin, (10.004) propamocarb, (10.005) propamocarb hydrochloride, (10.006) propamocarb-fosetylate, (10.007) tolclofos-methyl, (10.008) 1-(4-{4-[(5R)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (10.009) 1-(4-{4-[(5S)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (10.010) 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, (10.011) 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone, (10.012) 2-[3,5-bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl}-1,3-thiazol-2-yl)piperidin-1-yl]ethanone, (10.013) 2-{(5R)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (10.014) 2-{(5S)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (10.015) 2-{3-[2-(1-{]3,5-bis(difluoromethyl)-1H-pyrazol-1-yl]acetyl}piperidin-4-yl)-1,3-thiazol-4-yl]-4,5-dihydro-1,2-oxazol-5-yl}phenyl methanesulfonate, (10.016) 3-[2-(1-{[5-methyl-3-(trifluoromethyl)-1H-pyrazol-1-yl]acetyl}piperidin-4-yl)-1,3-thiazol-4-yl]-1,5-dihydro-2,4-benzodioxepin-6-yl methanesulfonate, (10.017) 9-fluoro-3-[2-(1-{[5-methyl-3-(trifluoromethyl)-1H-pyrazol-1-yl]acetyl}piperidin-4-yl)-1,3-thiazol-4-yl]-1,5-dihydro-2,4-benzodioxepin-6-yl methanesulfonate, (10.018) 3-[2-(1-{[3,5-bis(difluoromethyl)-1H-pyrazol-1-yl]acetyl}piperidin-4-yl)-1,3-thiazol-4-yl]-1,5-dihydro-2,4-benzodioxepin-6-yl methanesulfonate, (10.019) 3-[2-(1-{[3,5-bis(difluoromethyl)-1H-pyrazol-1-yl]acetyl}piperidin-4-yl)-1,3-thiazol-4-yl]-9-fluoro-1,5-dihydro-2,4-benzodioxepin-6-yl methanesulfonate.

11) Inhibitors of the melanin biosynthesis, for example (11.001) tolprocarb, (11.002) tricyclazole.

12) Inhibitors of the nucleic acid synthesis, for example (12.001) benalaxyl, (12.002) benalaxyl-M (kiralaxyl), (12.003) metalaxyl, (12.004) metalaxyl-M (mefenoxam).

13) Inhibitors of the signal transduction, for example (13.001) fludioxonil, (13.002) iprodione, (13.003) procymidone, (13.004) proquinazid, (13.005) quinoxyfen, (13.006) vinclozolin.

14) Compounds capable to act as an uncoupler, for example (14.001) fluazinam, (14.002) meptyldinocap.

15) Further compounds, for example (15.001) abscisic acid, (15.002) aminopyrifen, (15.003) benthiazole, (15.004) bethoxazin, (15.005) capsimycin, (15.006) carvone, (15.007) chinomethionat, (15.008) cufraneb, (15.009) cyflufenamid, (15.010) cymoxanil, (15.011) cyprosulfamide, (15.012) dipymetitrone, (15.013) flutianil, (15.014) ipflufenoquin, (15.015) methyl isothiocyanate, (15.016) mildiomycin, (15.017) nickel dimethyldithiocarbamate, (15.018) nitrothal-isopropyl, (15.019) oxyfenthiin, (15.020) pentachlorophenol and salts, (15.021) picarbutrazox, (15.022) quinofumelin, (15.023) D-tagatose, (15.024) tebufloquin, (15.025) tecloftalam, (15.026) tolnifanide, (15.027) 2-(6-benzylpyridin-2-yl)quinazoline, (15.028) 2-[6-(3-fluoro-4-methoxyphenyl)-5-methylpyridin-2-yl]quinazoline, (15.029) 2-phenylphenol and salts, (15.030) 4-amino-5-fluoropyrimidin-2-ol (tautomeric form: 4-amino-5-fluoropyrimidin-2(1H)-one), (15.031) 4-oxo-4-[(2-phenylethyl)amino]butanoic acid, (15.032) 5-amino-1,3,4-thiadiazole-2-thiol, (15.033) 5-chloro-N'-phenyl-N'-(prop-2-yn-1-yl)thiophene-2-sulfonohydrazide, (15.034) 5-fluoro-2-[(4-fluorobenzyl)oxy]-pyrimidin-4-amine, (15.035) 5-fluoro-2-[(4-methylbenzyl)oxy]pyrimidin-4-amine, (15.036) 5-fluoro-4-imino-3-methyl-1-[(4-methylphenyl)sulfonyl]-3,4-dihydropyrimidin-2(1H)-one, (15.037) but-3-yn-1-yl {6-[({[(Z)-(1-methyl-1H-tetrazol-5-yl)(phenyl)methylene]amino}oxy)methyl]pyridin-2-yl}carbamate, (15.038) ethyl (2Z)-3-amino-2-cyano-3-phenylacrylate, (15.039) phenazine-1-carboxylic acid, (15.040) propyl 3,4,5-trihydroxybenzoate, (15.041) quinolin-8-ol, (15.042) quinolin-8-ol sulfate (2:1), (15.043) 1-(4,5-dimethyl-1H-benzimidazol-1-yl)-4,4-difluoro-3,3-dimethyl-3,4-dihydroisoquinoline, (15.044) 1-(5-(fluoromethyl)-6-methyl-pyridin-3-yl)-4,4-difluoro-3,3-dimethyl-3,4-dihydroisoquinoline, (15.045) 1-(5,6-dimethylpyridin-3-yl)-4,4-difluoro-3,3-dimethyl-3,4-dihydroisoquinoline, (15.046) 1-(6-(difluoromethyl)-5-methoxy-pyridin-3-yl)-4,4-difluoro-3,3-dimethyl-3,4-dihydroisoquinoline, (15.047) 1-(6-(difluoromethyl)-5-methyl-pyridin-3-yl)-4,4-difluoro-3,3-dimethyl-3,4-dihydroisoquinoline, (15.048) 1-(6,7-dimethylpyrazolo[1,5-a]pyridin-3-yl)-4,4-difluoro-3,3-dimethyl-3,4-dihydroisoquinoline, (15.049) 2-{2-fluoro-6-[(8-fluoro-2-methylquinolin-3-yl)oxy]phenyl}propan-2-ol, (15.050) 3-(4,4,5-trifluoro-3,3-dimethyl-3,4-dihydroisoquinolin-1-yl)quinoline, (15.051) 3-(4,4-difluoro-3,3-dimethyl-3,4-dihydroisoquinolin-1-yl)-8-fluoroquinoline, (15.052) 3-(4,4-difluoro-5,5-dimethyl-4,5-dihydrothieno[2,3-c]pyridin-7-yl)quinoline, (15.053) 3-(5-fluoro-3,3,4,4-tetramethyl-3,4-dihydroisoquinolin-1-yl)quinoline, (15.054) 5-bromo-1-(5,6-dimethylpyridin-3-yl)-3,3-dimethyl-3,4-dihydroisoquinoline, (15.055) 8-fluoro-3-(5-fluoro-3,3,4,4-tetramethyl-3,4-dihydroisoquinolin-1-yl)-quinoline, (15.056) 8-fluoro-3-(5-fluoro-3,3-dimethyl-3,4-dihydroisoquinolin-1-yl)-quinoline, (15.057) 8-fluoro-N-(4,4,4-trifluoro-2-methyl-1-phenylbutan-2-yl)quinoline-3-carboxamide, (15.058) 8-fluoro-N-[(2S)-4,4,4-trifluoro-2-methyl-1-phenylbutan-2-yl]quinoline-3-carboxamide, (15.059) 9-fluoro-2,2-dimethyl-5-(quinolin-3-yl)-2,3-dihydro-1,4-benzoxazepine, (15.060) N-(2,4-dimethyl-1-phenylpentan-2-yl)-8-fluoroquinoline-3-carboxamide, (15.061) N-[(2S)-2,4-dimethyl-1-phenylpentan-2-yl]-8-fluoroquinoline-3-carboxamide, (15.062) 1,1-diethyl-3-[[4-[5-(trifluoromethyl)-1,2,4-oxadiazol-3-yl]phenyl]methyl]urea, (15.063) 1,3-dimethoxy-1-[[4-[5-(trifluoromethyl)-1,2,4-oxadiazol-3-yl]phenyl]methyl]urea, (15.064) 1-[[3-fluoro-4-(5-(trifluoromethyl)-1,2,4-oxadiazol-3-yl)phenyl]methyl]azepan-2-one, (15.065) 1-[[4-[5-(trifluoromethyl)-1,2,4-oxadiazol-3-yl]phenyl]methyl]piperidin-2-one, (15.066) 1-methoxy-1-methyl-3-[[4-[5-(trifluoromethyl)-1,2,4-oxadiazol-3-yl]phenyl]methyl]urea, (15.067) 1-methoxy-3-methyl-1-[[4-[5-(trifluoromethyl)-1,2,4-oxadiazol-3-yl]phenyl]methyl]urea, (15.068) 1-methoxy-3-methyl-1-[[4-[5-(trifluoromethyl)-1,2,4-oxadiazol-3-yl]phenyl]methyl]urea, (15.069) 2,2-difluoro-N-methyl-2-[4-[5-(trifluoromethyl)-1,2,4-oxadiazol-3-yl]phenyl]acetamide, (15.070) 3,3-dimethyl-1-[[4-[5-(trifluoromethyl)-1,2,4-oxadiazol-3-yl]phenyl]methyl]piperidin-2-one, (15.071) 3-ethyl-1-methoxy-1-[[4-[5-(trifluoromethyl)-1,2,4-oxadiazol-3-yl]phenyl]methyl]urea,

(15.072) 4,4-dimethyl-1-[[4-[5-(trifluoromethyl)-1,2,4-oxadiazol-3-yl]phenyl]methyl]pyrrolidin-2-one, (15.073) 4,4-dimethyl-2-[[4-[5-(trifluoromethyl)-1,2,4-oxadiazol-3-yl]phenyl]methyl]isoxazolidin-3-one, (15.074) 4-[5-(trifluoromethyl)-1,2,4-oxadiazol-3-yl]phenyl dimethylcarbamate, (15.075) 5,5-dimethyl-2-[[4-[5-(trifluoromethyl)-1,2,4-oxadiazol-3-yl]phenyl]methyl]isoxazolidin-3-one, (15.076) 5-methyl-1-[[4-[5-(trifluoromethyl)-1,2,4-oxadiazol-3-yl]phenyl]methyl]pyrrolidin-2-one, (15.077) ethyl 1-{4-[5-(trifluoromethyl)-1,2,4-oxadiazol-3-yl]benzyl}-1H-pyrazole-4-carboxylate, (15.078) methyl {4-[5-(trifluoromethyl)-1,2,4-oxadiazol-3-yl]phenyl}carbamate, (15.079) N-(1-methylcyclopropyl)-4-[5-(trifluoromethyl)-1,2,4-oxadiazol-3-yl]benzamide, (15.080) N-(2,4-difluorophenyl)-4-[5-(trifluoromethyl)-1,2,4-oxadiazol-3-yl]benzamide, (15.081) N-(2-fluorophenyl)-4-[5-(trifluoromethyl)-1,2,4-oxadiazol-3-yl] benzamide, (15.082) N,2-dimethoxy-N-[[4-[5-(trifluoromethyl)-1,2,4-oxadiazol-3-yl]phenyl]methyl]propanamide, (15.083) N,N-dimethyl-1-{4-[5-(trifluoromethyl)-1,2,4-oxadiazol-3-yl]benzyl}-1H-1,2,4-triazol-3-amine, (15.084) N-[(E)-methoxyiminomethyl]-4-[5-(trifluoromethyl)-1,2,4-oxadiazol-3-yl]benzamide, (15.085) N-[(E)-N-methoxy-C-methyl-carbonimidoyl]-4-[5-(trifluoromethyl)-1,2,4-oxadiazol-3-yl]benzamide, (15.086) N-[(Z)-methoxyiminomethyl]-4-[5-(trifluoromethyl)-1,2,4-oxadiazol-3-yl]benzamide, (15.087) N-[(Z)-N-methoxy-C-methyl-carbonimidoyl]-4-[5-(trifluoromethyl)-1,2,4-oxadiazol-3-yl]benzamide, (15.088) N-[[2,3-difluoro-4-[5-(trifluoromethyl)-1,2,4-oxadiazol-3-yl]phenyl]methyl]-3,3,3-trifluoro-propanamide, (15.089) N-[[4-[5-(trifluoromethyl)-1,2,4-oxadiazol-3-yl] phenyl]methyl]propanamide, (15.090) N-[4-[5-(trifluoromethyl)-1,2,4-oxadiazol-3-yl]phenyl]cyclopropanecarboxamide, (15.091) N-{2,3-difluoro-4-[5-(trifluoromethyl)-1,2,4-oxadiazol-3-yl]benzyl}butanamide, (15.092) N-{4-[5-(trifluoromethyl)-1,2,4-oxadiazol-3-yl]benzyl}cyclopropanecarboxamide, (15.093) N-{4-[5-(trifluoromethyl)-1,2,4-oxadiazol-3-yl]phenyl}propanamide, (15.094) N-allyl-N-[[4-[5-(trifluoromethyl)-1,2,4-oxadiazol-3-yl]phenyl]methyl]acetamide, (15.095) N-allyl-N-[[4-[5-(trifluoromethyl)-1,2,4-oxadiazol-3-yl]phenyl]methyl]propanamide, (15.096) N-ethyl-2-methyl-N-[[4-[5-(trifluoromethyl)-1,2,4-oxadiazol-3-yl]phenyl]methyl]propanamide, (15.097) N-methoxy-N-[[4-[5-(trifluoromethyl)-1,2,4-oxadiazol-3-yl]phenyl]methyl]cyclopropanecarboxamide, (15.098) N-methyl-4-[5-(trifluoromethyl)-1,2,4-oxadiazol-3-yl]benzamide, (15.099) N-methyl-4-[5-(trifluoromethyl)-1,2,4-oxadiazol-3-yl]benzenecarbothioamide, (15.100) N-methyl-N-phenyl-4-[5-(trifluoromethyl)-1,2,4-oxadiazol-3-yl]benzamide.

In another preferred embodiment, said further active substance is a biological pesticide.

Biological pesticides comprise in particular bacteria, fungi, yeasts, plant extracts and products formed by microorganisms, including proteins and secondary metabolites.

Biological pesticides comprise bacteria such as spore-forming bacteria, root-colonising bacteria and bacteria which act as biological insecticides, fungicides or nematicides.

Examples of such bacteria which are employed or can be used as biological pesticides are:

*Bacillus amyloliquefaciens,* strain FZB42 (DSM 231179), or *Bacillus cereus,* in particular *B. cereus* strain CNCM I-1562 or *Bacillus firmus,* strain I-1582 (Accession number CNCM I-1582) or *Bacillus pumilus,* in particular strain GB34 (Accession No. ATCC 700814) and strain QST2808 (Accession No. NRRL B-30087), or *Bacillus subtilis,* in particular strain GB03 (Accession No. ATCC SD-1397), or *Bacillus subtilis* strain QST713 (Accession No. NRRL B-21661) or *Bacillus subtilis strain* OST 30002 (Accession No. NRRL B-50421) *Bacillus thuringiensis,* in particular *B. thuringiensis* subspecies *israelensis* (serotype H-14), strain AM65-52 (Accession No. ATCC 1276), or *B. thuringiensis subsp. aizawai,* in particular strain ABTS-1857 (SD-1372), or *B. thuringiensis subsp. kurstaki* strain HD-1, or *B. thuringiensis subsp. tenebrionis* strain NB 176 (SD-5428), *Pasteuria penetrans, Pasteuria spp.* (Rotylenchulus reniformis nematode)-PR3 (Accession Number ATCC SD-5834), *Streptomyces microflavus* strain AQ6121 (= QRD 31.013, NRRL B-50550), *Streptomyces galbus* strain AQ 6047 (Acession Number NRRL 30232).

Examples of fungi and yeasts which are employed or can be used as biological pesticides are:

*Beauveria bassiana,* in particular strain ATCC 74040, *Coniothyrium minitans,* in particular strain CON/M/91-8 (Accession No. DSM-9660), *Lecanicillium spp.,* in particular strain HRO LEC 12, *Lecanicillium lecanii,* (formerly known as *Verticillium lecanii*), in particular strain KV01, *Metarhizium anisopliae,* in particular strain F52 (DSM3884/ ATCC 90448), *Metschnikowia fructicola,* in particular strain NRRL Y-30752, *Paecilomyces fumosoroseus (*now: *Isaria fumosorosea),* in particular strain IFPC 200613, or strain Apopka 97 (Accesion No. ATCC 20874), *Paecilomyces lilacinus,* in particular *P. lilacinus* strain 251 (AGAL 89/030550), *Talaromyces flavus,* in particular strain V117b, *Trichoderma $\alpha$troviride,* in particular strain SC1 (Accession Number CBS 122089), *Trichoderma harzianum,* in particular *T. harzianum rif$\alpha$i T39.* (Accession Number CNCM I-952).

Examples of viruses which are employed or can be used as biological pesticides are:

*Adoxophyes orana* (summer fruit tortrix) granulosis virus (GV), *Cydia pomonella* (codling moth) granulosis virus (GV), *Helicoverpa armigera* (cotton bollworm) nuclear polyhedrosis virus (NPV), *Spodoptera exigua* (beet armyworm) mNPV, *Spodopterafrugiperda* (fall armyworm) mNPV, *Spodoptera littoralis* (African cotton leafworm) NPV.

Also included are bacteria and fungi which are added as 'inoculant' to plants or plant parts or plant organs and which, by virtue of their particular properties, promote plant growth and plant health. Examples which may be mentioned are:

Agrobacterium spp., Azorhizobium caulinodans, Azospirillum spp., Azotobacter spp., Bradyrhizobium spp., Burkholderia spp., in particular Burkholderia cepacia (formerly known as Pseudomonas cepacia), Gigaspora spp., or Gigaspora monosporum, Glomus spp., Laccaria spp., Lactobacillus buchneri, Paraglomus spp., Pisolithus tinctorus, Pseudomonas spp., Rhizobium spp., in particular Rhizobium trifolii, Rhizopogon spp., Scleroderma spp., Suillus spp., Streptomyces spp.

Examples of plant extracts and products formed by microorganisms including proteins and secondary metabolites which are employed or can be used as biological pesticides are:

Allium sativum, Artemisia absinthium, azadirachtin, Biokeeper WP, Cassia nigricans, Celastrus angulatus, Chenopodium anthelminticum, chitin, Armour-Zen, Dryopteris filix-mas, Equisetum arvense, Fortune Aza, Fungastop, Heads Up (Chenopodium quinoa saponin extract), Pyrethrum/Pyrethrins, Quassia amara, Quercus, Quillaja, Regalia, "Requiem ™ Insecticide", rotenone, ryania/ryanodine, Symphytum officinale, Tanacetum vulgare, thymol, Triact 70, TriCon, Tropaeulum majus, Urtica dioica, Veratrin, Viscum album, Brassicaceae extract, in particular oilseed rape powder or mustard powder, as well as bioinsecticidal / acaricidal active substances obtained from olive oil, in particular unsaturated fatty/carboxylic acids having carbon chain lengths C16-C20 as active ingredients, such as, for example, contained in the product with the trade name FLiPPER®.

In another embodiment the compounds of the formula (I) can be combined with safeners such as, for example, benoxacor, cloquintocet (-mexyl), cyometrinil, cyprosulfamide, dichlormid, fenchlorazole (-ethyl), fenclorim, flurazole, fluxofenim, furilazole, isoxadifen (-ethyl), mefenpyr (-diethyl), naphthalic anhydride, oxabetrinil, 2-methoxy-N-({4-[(methylcarbamoyl)amino]phenyl}sulphonyl)benzamide (CAS 129531-12-0), 4-(dichloroacetyl)-1-oxa-4-azaspiro [4.5]decane (CAS 71526-07-3), 2,2,5-trimethyl-3-(dichloroacetyl)-1,3-oxazolidine (CAS 52836-31-4).

All named mixing partners can, if their functional groups enable this, optionally form salts with suitable bases or acids. All named mixing partners can include tautomeric forms, where applicable.

Preferred mixing partners are selected from the group comprising beta-cyfluthrin, Deltamethrin, Permethrin, Transfluthrin, Spiromesifen, Spidoxamat, Ethiprole, Fipronil, Thiacloprid and Tetraniliprole.

Most preferred mixing partners are Deltamethrin, Transfluthrin, Spiromesifen and Spidoxamat.

Moreover, the present invention is directed to the use of the polymorphic form A of the compound of formula (1) for controlling animal pests. The term "controlling" means inhibition of animal pest development (including mortality, feeding reduction, and/or mating disruption). It has been surprisingly found that although polymorphic form A has 60% of the water solubility of polymorphic form B, the systemic biological efficacy of polymorphic form A is at the same level as that of polymorphic form B.

In a particular embodiment, the present invention is directed to controlling animal pests in crops of useful plants including cereals (wheat, rice, triticale, barley, rye, oats), maize, soya bean, potato, sugar beet, sugar cane, tomatoes, pepper, cucumber, melon, carrot, watermelon, onion, lettuce, spinach, leek, beans, *Brassica oleracea* (e.g. cabbage) and other vegetable species, cotton, tobacco, oilseed rape, and also fruit plants (with the fruits apples, pears, citrus fruits and grapevines). In a particular preferred embodiment the useful plants are fruits and grapes, vegetables and flowers, coffee and cocoa (plantations), potatoes, cotton, cereals, sugar beet, oilseed rape, corn and soybeans. In another particular embodiment of the present invention, the useful plants are transgenic plants.

The present invention is also directed to a method for controlling animal or microbial pests, wherein the form A of the compound of formula (I) or a plant protection agent as defined above containing the form A of the compound of formula (I), is allowed to act on animal or microbial pests and/or their habitat.

The control of the animal pests is preferably conducted in agriculture and forestry, and in material protection. Preferably excluded therefrom are methods for the surgical or therapeutic treatment of the human or animal body and diagnostic methods carried out on the human or animal body.

In another embodiment, the present invention is directed to the use of the form A of the compound of formula (I) for controlling animal pests. The form A of the compound of formula (I) can be advantageously used as a pesticide, in particular in a plant protection agent as described above. Preferably excluded therefrom are uses in methods for the surgical or therapeutic treatment of the human or animal body and in diagnostic methods carried out on the human or animal body.

In the context of the present application, the term "pesticide" in each case also always comprises the term "plant protection agent".

All plants and plant parts can be treated in accordance with the invention. Here, plants are to be understood to mean all plants and plant parts such as wanted and unwanted wild plants or crop plants (including naturally occurring crop plants), for example cereals (wheat, rice, triticale, barley, rye, oats), maize, soya bean, potato, sugar beet, sugar cane, tomatoes, pepper, cucumber, melon, carrot, watermelon, onion, lettuce, spinach, leek, beans, *Brassica oleracea* (e.g. cabbage) and other vegetable species, cotton, tobacco, oilseed rape, and also fruit plants (with the fruits apples, pears, citrus fruits and grapevines). Crop plants can be plants which can be obtained by conventional breeding and optimization methods or by biotechnological and genetic engineering methods or combinations of these methods, including the transgenic plants and including the plant varieties which can or cannot be protected by varietal property rights. Plants should be understood to mean all developmental stages, such as seeds, seedlings, young (immature) plants up to mature

plants. Plant parts should be understood to mean all parts and organs of the plants above and below ground, such as shoot, leaf, flower and root, examples given being leaves, needles, stalks, stems, flowers, fruit bodies, fruits and seeds, and also tubers, roots and rhizomes. Parts of plants also include harvested plants or harvested plant parts and vegetative and generative propagation material, for example seedlings, tubers, rhizomes, cuttings and seeds.

Treatment according to the invention of the plants and plant parts with the form A of the compounds of the formula (I) is carried out directly or by allowing the compounds to act on the surroundings, environment or storage space by the customary treatment methods, for example by immersion, spraying, evaporation, fogging, scattering, painting on, injection and, in the case of propagation material, in particular in the case of seeds, also by applying one or more coats.

As already mentioned above, it is possible to treat all plants and their parts according to the invention. In a preferred embodiment, wild plant species and plant cultivars, or those obtained by conventional biological breeding methods, such as crossing or protoplast fusion, and also parts thereof, are treated. In a further preferred embodiment, transgenic plants and plant cultivars obtained by genetic engineering methods, if appropriate in combination with conventional methods (genetically modified organisms), and parts thereof are treated. The term "parts" or "parts of plants" or "plant parts" has been explained above. The invention is used with particular preference to treat plants of the respective commercially customary cultivars or those that are in use. Plant cultivars are to be understood as meaning plants having new properties ("traits") and which have been obtained by conventional breeding, by mutagenesis or by recombinant DNA techniques. They can be cultivars, varieties, bio- or genotypes.

The transgenic plants or plant cultivars (those obtained by genetic engineering) which are to be treated with preference in accordance with the invention include all plants which, through the genetic form, received genetic material which imparts particular advantageous useful properties ("traits") to these plants. Examples of such properties are better plant growth, increased tolerance to high or low temperatures, increased tolerance to drought or to levels of water or soil salinity, enhanced flowering performance, easier harvesting, accelerated ripening, higher yields, higher quality and/or a higher nutritional value of the harvested products, better storage life and/or processability of the harvested products. Further and particularly emphasized examples of such properties are increased resistance of the plants against animal and microbial pests, such as against insects, arachnids, nematodes, mites, slugs and snails owing, for example, to toxins formed in the plants, in particular those formed in the plants by the genetic material from Bacillus thuringiensis (for example by the genes CryIA(a), CryIA(b), CryIA(c), CryIIA, CryIIIA, CryIIIB2, Cry9c Cry2Ab, Cry3Bb and CryIF and also combinations thereof), furthermore increased resistance of the plants against phytopathogenic fungi, bacteria and/or viruses owing, for example, to systemic acquired resistance (SAR), systemin, phytoalexins, elicitors and also resistance genes and correspondingly expressed proteins and toxins, and also increased tolerance of the plants to certain herbicidally active compounds, for example imidazolinones, sulphonylureas, glyphosate or phosphinothricin (for example the "PAT" gene). The genes which impart the desired traits in question may also be present in combinations with one another in the transgenic plants. Examples of transgenic plants which may be mentioned are the important crop plants, such as cereals (wheat, rice, triticale, barley, rye, oats), maize, soya beans, potatoes, sugar beet, sugar cane, tomatoes, peas and other types of vegetable, cotton, tobacco, oilseed rape and also fruit plants (with the fruits apples, pears, citrus fruits and grapes), with particular emphasis being given to maize, soya beans, wheat, rice, potatoes, cotton, sugar cane, tobacco and oilseed rape. Traits which are particularly emphasized are the increased resistance of the plants to insects, arachnids, nematodes and slugs and snails.

## Crop protection - types of treatment

The treatment of the plants and plant parts with form A of the compounds of the formula (I) is carried out directly or by action on their surroundings, habitat or storage space using customary treatment methods, for example by dipping, spraying, atomizing, irrigating, evaporating, dusting, fogging, broadcasting, foaming, painting, spreading-on, injecting, watering (drenching), drip irrigating and, in the case of propagation material, in particular in the case of seed, furthermore as a powder for dry seed treatment, a solution for liquid seed treatment, a water-soluble powder for slurry treatment, by incrusting, by coating with one or more coats, etc. It is furthermore possible to apply form A of the compounds of the formula (I) by the ultra-low volume method or to inject the application form of form A of the compound of the formula (I), or the form A of the compound of the formula (I) itself, into the soil.

A preferred direct treatment of the plants is foliar application, i.e. form A of the compounds of the formula (I) is applied to the foliage, where treatment frequency and the application rate should be adjusted according to the level of infestation with the pest in question.

In the case of systemically active compounds, form A of the compounds of the formula (I) also accesses the plants via the root system. The plants are then treated by the action of form A of the compounds of the formula (I) on the habitat of the plant. This may be done, for example, by drenching, or by mixing into the soil or the nutrient solution, i.e. the locus of the plant (e.g. soil or hydroponic systems) is impregnated with a liquid form of form A of the compounds of the formula (I), or by soil application, i.e. form A of the compounds of the formula (I) according to the invention is introduced in solid form (e.g. in the form of granules) into the locus of the plants, or by drip application (often also referred to as "chemigation"), i.e. the liquid

application of form A of the compounds of the formula (I) according to the invention from surface or sub-surface driplines over a certain period of time together with varying amounts of water at defined locations in the vicinity of the plants. In the case of paddy rice crops, this can also be done by metering form A of the compounds of the formula (I) in a solid application form (for example as granules) into a flooded paddy field.

**Treatment of seed**

The control of animal pests by treating the seed of plants has been known for a long time and is the subject of continuous improvements. However, the treatment of seed entails a series of problems which cannot always be solved in a satisfactory manner. Thus, it is desirable to develop methods for protecting the seed and the germinating plant which dispense with, or at least reduce considerably, the additional application of pesticides during storage, after sowing or after emergence of the plants. It is furthermore desirable to optimize the amount of active compound employed in such a way as to provide optimum protection for the seed and the germinating plant from attack by animal pests, but without damaging the plant itself by the active compound employed. In particular, methods for the treatment of seed should also take into consideration the intrinsic insecticidal or nematicidal properties of pest-resistant or -tolerant transgenic plants in order to achieve optimum protection of the seed and also the germinating plant with a minimum of pesticides being employed.
The present invention therefore in particular also relates to a method for the protection of seed and germinating plants, from attack by pests, by treating the seed with form A of the compounds of the formula (I). The method according to the invention for protecting seed and germinating plants against attack by pests furthermore comprises a method where the seed is treated simultaneously in one operation or sequentially with form A of the compounds of the formula (I) and a mixing component. It also comprises a method where the seed is treated at different times with form A of the compounds of the formula (I) and a mixing component.
The invention likewise relates to the use of form A of the compounds of the formula (I) for the treatment of seed for protecting the seed and the resulting plant from animal pests.
Furthermore, the invention relates to seed which has been treated with form A of the compounds of the formula (I) according to the invention so as to afford protection from animal pests. The invention also relates to seed which has been treated simultaneously with form A of the compounds of the formula (I) and a mixing component. The invention furthermore relates to seed which has been treated at different times with form A of the compounds of the formula (I) and a mixing component. In the case of seed which has been treated at different points in time with form A of the compounds of the formula (I) and a mixing component, the individual substances may be present on the seed in different layers. Here, the layers comprising form A of the compounds of the formula (I) and mixing components may optionally be separated by an intermediate layer. The invention also relates to seed where form A of the compounds of the formula (I) and a mixing component have been applied as component of a coating or as a further layer or further layers in addition to a coating.
Furthermore, the invention relates to seed which, after the treatment with form A of the compounds of the formula (I), is subjected to a film-coating process to prevent dust abrasion on the seed.
One of the advantages encountered with a systemically acting form A of the compounds of the formula (I) is the fact that, by treating the seed, not only the seed itself but also the plants resulting therefrom are, after emergence, protected against animal pests. In this manner, the immediate treatment of the crop at the time of sowing or shortly thereafter can be dispensed with.
It has to be considered a further advantage that by treatment of the seed with form A of the compounds of the formula (I), germination and emergence of the treated seed may be enhanced.
It is likewise to be considered advantageous that form A of the compounds of the formula (I) can be used in particular also for transgenic seed.
Furthermore, form A of the compounds of the formula (I) can be employed in combination with compositions or compounds of signaling technology, leading to better colonization by symbionts such as, for example, rhizobia, mycorrhizae and/or endophytic bacteria or fungi, and/or to optimized nitrogen fixation.
Form A of the compounds of the formula (I) is suitable for protection of seed of any plant variety which is used in agriculture, in the greenhouse, in forests or in horticulture. In particular, this takes the form of seed of cereals (for example wheat, barley, rye, millet and oats), corn, cotton, soya beans, rice, potatoes, sunflowers, coffee, tobacco, canola, oilseed rape, beets (for example sugarbeets and fodder beets), peanuts, vegetables (for example tomatoes, cucumbers, bean, cruciferous vegetables, onions and lettuce), fruit plants, lawns and ornamental plants. The treatment of the seed of cereals (such as wheat, barley, rye and oats), maize, soya beans, cotton, canola, oilseed rape, vegetables and rice is of particular importance.
As already mentioned above, the treatment of transgenic seed with form A of the compounds of the formula (I) is also of particular importance. This takes the form of seed of plants which, as a rule, comprise at least one heterologous gene which governs the expression of a polypeptide with in particular insecticidal and/or nematicidal properties. The heterologous genes in transgenic seed can originate from microorganisms such as Bacillus, Rhizobium, Pseudomonas, Serratia, Trichoderma, Clavibacter, Glomus or Gliocladium. The present invention is particularly suitable for the treatment

of transgenic seed which comprises at least one heterologous gene originating from Bacillus sp. It is particularly preferably a heterologous gene derived from Bacillus thuringiensis.

In the context of the present invention, form A of the compounds of the formula (I) is applied to the seed. Preferably, the seed is treated in a state in which it is stable enough to avoid damage during treatment. In general, the seed may be treated at any point in time between harvest and sowing. The seed usually used has been separated from the plant and freed from cobs, shells, stalks, coats, hairs or the flesh of the fruits. For example, it is possible to use seed which has been harvested, cleaned and dried down to a moisture content which allows storage. Alternatively, it is also possible to use seed which, after drying, has been treated with, for example, water and then dried again, for example priming. In the case of rice seed, it is also possible to use seed which has been soaked, for example in water to a certain stage of the rice embryo ('pigeon breast stage'), stimulating the germination and a more uniform emergence.

The seed dressing formulations usable in accordance with the invention can be used to treat a wide variety of different kinds of seed either directly or after prior dilution with water. For instance, the concentrates or the preparations obtainable therefrom by dilution with water can be used to dress the seed of cereals, such as wheat, barley, rye, oats, and triticale, and also the seed of maize, rice, oilseed rape, peas, beans, cotton, sunflowers, soya beans and beets, or else a wide variety of different vegetable seed. The seed dressing formulations usable in accordance with the invention, or the dilute use forms thereof, can also be used to dress seed of transgenic plants.

For treatment of seed with the seed dressing formulations usable in accordance with the invention, or the use forms prepared therefrom by adding water, all mixing units usable customarily for the seed dressing are useful. Specifically, the procedure in the seed dressing is to place the seed into a mixer, operated batchwise or continously, to add the particular desired amount of seed dressing formulations, either as such or after prior dilution with water, and to mix everything until the formulation is distributed homogeneously on the seed and excessive moisture has evaporated.

The application rate of the seed dressing formulations usable in accordance with the invention can be varied within a relatively wide range. It is guided by the particular content of form A of the compounds of the formula (I) in the formulations and by the seed. The application rates are generally between 0.001 and 50 g per kilogram of seed, preferably between 0.01 and 15 g per kilogram of seed.

Table 8 Materials used in the examples

| Dispersant | | | |
|---|---|---|---|
| Trade name | CAS No. | Manufacturer/ supplier | Chemical name |
| ATLOX 4894 | Proprietary | Croda | polyoxyethylene alkyl ether |
| ATLOX 4913 | Proprietary | Croda | hydrophilic methyl methacrylate graft copolymer |
| KURARAY POVAL 8-88 | 9002-89-5 | Kuraray | Polyvinyl alcohol |

Rheological Agent

| Trade name | CAS No. | Manufacturer/ supplier | Chemical name |
|---|---|---|---|
| Rhodopol 23 | 11138-66-2 | Solvay | Xanthan gum |
| AEROSIL R 972 | 68611-44-9 | Evonik | Hydrophobic modified synthetic silica |

pH Buffer/Antifoam/Biocide/Antifreeze/Antioxidant

| Trade name | CAS No. | Manufacturer/ supplier | Chemical name |
|---|---|---|---|
| Citric Acid | 77-92-9 | Cargill | Citric acid |
| Silcolapse 426R | 63148-62-9 | Solvay | Polydimethylsiloxane |
| Silcolapse 432 | | Solvay | Polydimethylsiloxane |
| Kathon CG/ICP | 55965-84-9 | ROHM AND HAAS | 5-Chloro-2-methyl-3(2H)-isothiazolone mixt. with 2-methyl-3(2H)-isothiazolone |

(continued)

| Trade name | CAS No. | Manufacturer/ supplier | Chemical name |
|---|---|---|---|
| Proxel GXL | 2634-33-5 | Lonza | 1,2-benzisothiazol-3(2H)-one |
| Urea | 57-13-6 | - | Urea |

## Tests and Methods used in the examples

Methods

All data which is part of the present application has been prepared according to the methods described below unless otherwise indicated. The samples used for measurement were directly used and did not undergo any further sample preparation.

### XRPD

X-Ray diffraction patterns were recorded at room temperature using XRD -diffractometers X'Pert PRO (PANalytical) and STOE STADI-P (radiation Cu K alpha 1, wavelength 1.5406 Å). All X-Ray reflections are quoted as °2Θ (theta) values (peak maxima) with a resolution of ± 0.2°.

### Raman

Raman spectra were recorded at room temperature using FT-Raman-spectrophotometers (model RFS 100 and MultiRam) from Bruker. Resolution was 2 $cm^{-1}$. Measurements were performed in glass vials or aluminium discs.

### IR

IR-ATR-spectra were recorded at room temperature using a FT-IR-spectrophotometer Tensor 37 with universal diamond ATR device or a Lumos with ATR device from Bruker. Resolution was 2 $cm^{-1}$.

### DSC

DSC thermograms were recorded using DSC calorimeters DSC 3 and DSC 3+ from Mettler or Diamond DSC and DSC 8000 from Perkin Elmer. The measurements were performed with a heating rate of 20 $Kmin^{-1}$ or 2 $Kmin^{-1}$ using perforated aluminium pans. Flow gas was nitrogen. Examples

I Polymorphic form A of 4-[(6-chloro-3-pyridylmethyl)(2,2-difluoroethyl)amino]furan-2(5H)-one

### I.1 Preparation of polymorphic form A

Example 1

430 mg of 4-[(6-chloro-3-pyridylmethyl)(2,2-difluoroethyl)amino]furan-2(5H)-one in the polymorphic form B, prepared as described in WO-A-2011/051151, are dissolved in 60 ml of toluene and the solution is filtered. One fourth of the solution is stored at room temperature and ambient humidity until the solvent is evaporated. The residue is tested by thermal analysis and corresponds to the title compound in the polymorphic form A.

Example 2

404 mg of 4-[(6-chloro-3-pyridylmethyl)(2,2-difluoroethyl)amino]furan-2(5H)-one in the polymorphic form B, prepared as described in WO-A-2011/051151, are dissolved in 60 ml of methanol and the solution is filtered. One fourth of the solution is stored in a refrigerator until the solvent is evaporated. The residue is tested by thermal analysis and corresponds to the title compound in the polymorphic form A.

Example 3

405 mg of 4-[(6-chloro-3-pyridylmethyl)(2,2-difluoroethyl)amino]furan-2(5H)-one in the polymorphic form B,

prepared as described in WO-A-2011/051151, are dissolved in 20 ml of ethyl acetate and the solution is filtered. 5 ml of n-heptane are added to a quarter of the solution and this is stored at room temperature and ambient humidity until the solvent is evaporated. The residue is tested by X-ray diffraction and corresponds to the title compound in the polymorphic form A.

Example 4

413 mg of 4-[(6-chloro-3-pyridylmethyl)(2,2-difluoroethyl)amino]furan-2(5H)-one in the polymorphic form B, prepared as described in WO-A-2011/051151, are dissolved in 60 ml of isopropanol and the solution is filtered. One fourth of the solution is stored at room temperature and ambient humidity until the solvent is evaporated. The residue is viscous. It is scratched and left to stand at room temperature and ambient conditions until it has crystallized. The residue is tested by X-ray diffraction and corresponds to the title compound in the polymorphic form A.

Example 5

106 mg of 4-[(6-chloro-3-pyridylmethyl)(2,2-difluoroethyl)amino]furan-2(5H)-one in the polymorphic form B, prepared as described in WO-A-2011/051151 are suspended in 1 ml of water and shaken in an Eppendorf Thermomix at 25°C (1400 rpm, 30 min shaking/30 min stop). After one week the suspension is dried at room temperature and ambient humidity. The residue is tested by IR spectroscopy and corresponds to the title compound in the polymorphic form A.

II Polymorphic form B of 4-[(6-chloro-3-pyridylmethyl)(2,2-difluoroethyl)amino]furan-2(5H)-one

**II.1 Preparation of polymorphic form B**

4-[(6-chloro-3-pyridylmethyl)(2,2-difluoroethyl)amino]furan-2(5H)-one in the polymorphic form B has been produced as described in Preparation Example 3 of WO-A-2011/051151.

III. Water solubility of Flupyradifurone polymorphs

The water solubility of FPF polymorph A and B was determined by saturating a certain amount of demineralized water with the respective polymorph, stirring the resulting saturated suspension overnight, filtering the undissolved solid residue, and measuring the dissolved concentration of FPF in the filtrate.

Table 9: Measured water solubility of FPF Polymorphs

| Polymorph | Polymorph Composition | Water Solubility (g/L) |
|---|---|---|
| A | 88% A : 12% B | 2.0 |
| B | 0% A: 100 % B | 3.2 |

IV Flupyradifurone FS 480 Formulation Examples

*IV.1 Preparation of Flupyradifurone FS 480*

Formulation components are weighed in, homogenized with a high-shear device (e.g. Ultraturrax or colloidal mill) and subsequently milled in a bead mill (e.g. Dispermat SL50, 80% filling, 1.0-1.25 mm glass or zirconium oxide beads, 4000 rpm, circulation grinding) until a particle size of <10 μm is achieved.

Altematively, formulation components are mixed in a bottle followed by addition of approx. 25vol.-% of 1.0-1.25 mm glass beads. The bottle is then closed, clamped in an agitator apparatus (e.g. Retsch MM301) and treated at 30 Hz for several minutes until a particle size of <10 μm is achieved.

After milling to the required particle size distribution, 0,16 % by weight thickener (e.g. xanthan gum), and biocides, and antifoam and water are added to give a fine active substance suspension. Water is added in such amount to result in a total amount of 100 % by weight. Dilution with water gives a stable suspension of the active substances.

**Table 10:** Composition of Flupyradifurone FS 480

| Component | Function | %w/w | g/L |
|---|---|---|---|
| FLUPYRADIFURONE | Active Ingredient | 40,67797 | 480 |
| ATLOX 4894 | Dispersant | 1,0 | 11,8 |

(continued)

| Component | Function | %w/w | g/L |
|---|---|---|---|
| ATLOX 4913 | Dispersant | 4,5 | 53,1 |
| KURARAY POVAL 8-88 | Dispersant | 0,6 | 7,08 |
| AEROSIL R 972 | Rheological modifier | 0,6 | 7,08 |
| RHODOPOL 23 | Rheological modifier | 0,16 | 1,888 |
| CITRIC ACID ANHYDROUS | Buffer | 0,05 | 0,59 |
| SILCOLAPSE 432 (Batch 1) or SILCOLAPSE 426R (Batches 2/3/4) | Antifoam | 0,1 | 1,18 |
| KATHON CG/ICP | Preservative | 0,0824 | 0,97232 |
| PROXEL GXL | Preservative | 0,1545 | 1,8231 |
| UREA | Antifreeze | 6,5 | 76,7 |
| WATER | Carrier | To 100% | To 1L |

*IV.2 Control of Flupyradifurone Form during milling*[MS1]

**Table 11**: Flupyradifurone Form as a function of milling conditions of Flupyradifurone FS 480

| FPF Polymorph Composition before Milling | Type of Beads | Milling Exit Temperature | FPF Polymorph Composition after Milling |
|---|---|---|---|
| 0% Mod A : 100% Mod B[BK2] | Zirkonium | 20-40°C | 90% Mod A : 10% Mod B |
| 15% Mod A: 85% Mod B | Glass | 21-22°C | 10% Mod A; 90% Mod B |

*IV.3 Method for determining stability of different polymorphs of Flupyradifurone in FS 480*

Storage stability testing is performed for a given number of weeks (w) at different temperatures such as 0°C, 20°C, 30°C, 40°C, 54°C or thaw-freeze cycling (= TW; constant temperature change from -15°C to +30°C and back within one week).

Phase separation directly after storage is reported either as sediment fraction and calculated from the quotient H1 [level of the interface layer between sediment phase and supematant] divided by H0 [total fill height of the sample] or, as in the present case, as supernatant fraction:

$$\text{Sediment fraction} = (H1/H0) * 100 \, [\%]$$

or

$$\text{Supernatant fraction} = 100 - \text{sediment content} \, [\%]$$

Stable and convenient formulations are expected to exhibit no or only little phase separation upon storage at elevated temperatures for a prolonged period of time and are easily rehomogenized. Marked phase separation after a

short storage time indicates limited storage stability and a significant tendency to formation of sediments that are dispersible only with difficulty, if at all, during storage.

Sometimes a catastrophic loss of stability will manifest itself in a solidification of the formulation, making the formulation unusable.

Table 12: Stability of Flupyradifurone FS 480 with Form B

| Polymorph Composition of FPF before milling | Polymorph Compositio n of FPF after milling | Polymorph Composition after 1 Week storage @40°C | Phase Separation/Synere sis after 1 Week @40°C | Polymorph Composition after 1 Week @54°C | Phase Separation/Synere sis after 1 Week @54°C |
|---|---|---|---|---|---|
| 15% form A<br><br>85% Form B | 10% Form A<br><br>90%Form B | 95% Form A<br><br>5% Form B | Sample solidifies completely | 96% Form A<br><br>4% Form B | Sample solidifies completely |

**Table 13:** Stability of Flupyradifurone FS 480 with form A

| Polymorph Composition of FPF before milling | Polymorph Composition of FPF after milling | Polymorph Compositio n after 2 Weeks storage @40°C | Phase Separation/Synere sis after 4 Week @40°C | Polymorph Composition after 2 Week @54°C | Phase Separation/Synere sis after 4 Week @54°C |
|---|---|---|---|---|---|
| 59% Form A / 41% Form B[BK3] | **100% Form A** | **100% Form A** | No phase separation | **100% Form A** | Sample solidifies completely |
| Formulated with two batches of activeà100% Form A /0% Form B & 100% Form A / 0% Form B\|[BK4] | **99%Form A**<br><br>**1% Form B** | **100% Form A** | No phase separation | **100% Form A** | No phase separa-tion |
| 100% Form A | **100% Form A** | **100% Form A** | No phase separa-tion | **100% Form A**<br>0% Form B | No phase separa-tion |

Comments to Table 12 & Table 13

As can be seen by the data in Tables 12 & 13, samples containing some amounts of form B of Flupyradifurone after milling (90% or more) are not stable during storage at elevated temperatures and solidify completely making the formulation unusable.

Mixtures of form A and form B of Flupyradifurone can be transformed into only form A, or mostly form A, during milling, and these formulations containing only, or high amounts of form A of Flupyradifurone are then stable to storage at 40°C for 4 weeks, and some even at 54°C for 4 weeks.

In other words, dispersion formulations made up of mostly form A of Flupyradifurone are surprisingly more stable to storage, since they are compatible with elevated temperature storage conditions, this characteristic making these formulations much more reliable and usable.

V Biological Testing of Flupyradifurone (FPF) FS 480

Physico-chemical properties are key drivers for systemic plant uptake and biological activity. To test the efficacy of different FPF modifications against the bird cherry-oat aphid *Rhopalosiphum padi* a sufficient number of barley seeds (variety "Scarlett", thousand kernel weight: 43.6 g) were manually dressed with a defined amount of the Flupyradifurone FS480 formulated with 100 % Form A, 100 % Form B and a combination of 99% Form A and 1 % Form B, respectively. Test concentrations were 0.15 g active ingredient per kg of seed (commercial dose rate in cereals) and 0.075 g active ingredient per kg of seed. Longitudinal boxes were filled with 5,900 g of a sandy loam soil (75.1 % sand, 10.3 % clay, 14.8 % silt, 1.75 % humus, pH 6.9) and 15 seeds per box were sown at spacing of approx. 2.5 cm and at depth of 3 cm . After sowing, boxes were watered to reach 50-70 % of field capacity and covered with plastic foil until first plants were emerging. Aphid

infestation was conducted at the second leaf stage by adding multiple pieces of infested leaf material to each test box. A second re-infestation was carried out at 3 days after the first infestation using methods described previously. The biological activity of tested FPF modifications was evaluated at 3 and 7 days after the initial infestation by a visual assessment of the colonized leaf area in comparison to the untreated and infested control. Results were expressed in percent efficacy. 100 % efficacy means that no aphids were able to establish a population and 0 % means that aphids colonized a comparable leaf area as in the untreated infested check. Growing conditions were at a constant temperature of 20°C, 50 % relative humidity and 14 hours of illumination using sodium pressure lamps. The experiment comprised 3 replicates per treatment. Results are indicated in Table 14.

Table 14: Systemic Biological Efficacy of FPF FS 480 formulated with FPF form A and form B (Trial Report SGRS040)

| **FPF Polymorph in Formulation Batch** | **Water solubility of FPF Polymorph** | **FPF Rate** | **% Efficacy after 3 days** | **% Efficacy after 7 days** | **FPF Rate** | **% Efficacy after 3 days** | **% Efficacy after 7 days** |
|---|---|---|---|---|---|---|---|
| 100 % Form B | 3,2 g/L | 0,075 g/kg | 91,7 | 76.7 | 0,15 g/kg | 93,3 | 88,3 |
| 100 % Form A | 1,9 g/L | 0,075 g/kg | 91,7 | 78.3 | 0,15 g/kg | 95,0 | 88,3 |
| 99%Form A<br>**1%** Form B[BK5] | 1,9 g/L | 0,075 g/kg | 93,3 | 80.0 | 0,15 g/kg | 95,0 | 86,7 |

Comments to Table 14

Tested FPF concentrations showed excellent efficacy against *R.padi* after seed treatment. Especially at the first evaluation date no difference between the half (0.075 g/kg) and the full dose rate (0.15 g/kg) was observed. However, as expected, 0.15 g/kg produced superior residual activity. Interestingly, no difference in biological activity was observed between the individual FPF modifications. This result is surprising since the systemic biological efficacy of chemical active ingredients is closely linked with its water solubility. Results of the current experiment clearly show that a 60 % reduced water solubility of the FPF form A does not lead to a reduced biological efficacy in comparison to FPF form B. Together with the fact that form A is also substantially more stable as an FS formulation makes this form particularly convenient to use.

## Claims

1. An agrochemical formulation comprising the crystalline form A of 4-[(6-chloro-3-pyridylmethyl)(2,2-difluoroethyl)amino]furan-2(5H)-one of formula (1)

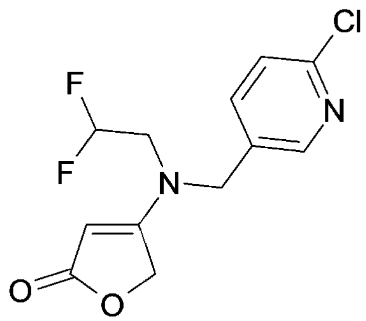

(1)

which in a X-ray powder diffractogram at 25°C and C u-K$\alpha$ 1 radiation displays at least the following reflections, quoted as 2$\Theta$ value $\pm$ 0.2°: 21,0; 22,4 and 29,4 and
wherein at least 85 % by weight of 4-[(6-chloro-3-pyridylmethyl)(2,2-difluoroethyl)amino]furan-2(5H)-one of formula (1) is present in its crystalline form A.

2. An agrochemical formulation according to claim 1, wherein at least 95 % by weight of 4-[(6-chloro-3-pyridylmethyl)(2,2-difluoroethyl)amino]furan-2(5H)-one of formula (1) is present in its crystalline form A.

**3.** An agrochemical formulation according to claim 1 or 2, comprising

a) the polymorphic form A of 4-[(6-chloro-3-pyridylmethyl)(2,2-difluoroethyl)amino]furan-2(5H)-one,
b) one or more dispersant,
c) one or more rheological control agent (rheological modifier), and
h) carrier (filler) to 1 l (liter).

**4.** An agrochemical formulation according to claim 1 or 2, comprising

a) the polymorphic form A of 4-[(6-chloro-3-pyridylmethyl)(2,2-difluoroethyl)amino]furan-2(5H)-one,
b) one or more dispersant,
c) one or more rheological control agent (rheological modifier),
d) one or more pH-buffer,
e) one or more antifoams,
f) one or more biocides,
g) one or more antifreeze agents, and
h) carrier (filler) to 1 L (litre).

**5.** An agrochemical formulation according to claim 3, comprising

a) in the concentration range of 400-500 g/L,
b) in the concentration range of 60-80 g/L,
c) in the concentration range of 6-10 g/L, and
h) water to 1L.

**6.** An agrochemical formulation according to claim 4, comprising

a) in the concentration range of 400-500 g/L,
b) in the concentration range of 60-80 g/L,
c) in the concentration range of 6-10 g/L,
d) in the concentration range of 0.01-10 g/L,
e) in the concentration range of 0.1-2 g/L,
f) in the concentration range of 0.1-3 g/L,
g) in the concentration range 10-100 g/L, and
h) water to 1 L (litre).

**7.** An agrochemical formulation according to one or more of the preceding claims, comprising one or more further adjuvants and auxiliaries as component i).

**8.** An agrochemical formulation according to one or more of the preceding claims, comprising one or more further active ingredients k).

**9.** Use of an agrochemical formulation according to one or more of the preceding claims as a seed coating.

**10.** A process for the production of crystalline form A of 4-[(6-chloro-3-pyridylmethyl)(2,2-difluoroethyl)amino]furan-2(5H)-one, which in a X-ray powder diffractogram at 25°C and Cu-K $\alpha$ 1 radiation displays the following reflections, quoted as 2$\Theta$ value $\pm$ 0.2°: 21,0; 22,4 and 29,4, comprising the following steps:

a) diluting and/or suspending the compound of formula (1) in a suitable solvent or solvent mixture;
b) adjusting a temperature of between 0 and 25°C; and
c) storing the solution or slurry obtained in step b) at a temperature of between 0 and 25°C until the solvent is evaporated and crystals of polymorphic form A have formed.

**11.** The process according to claim 10, wherein the solvent is selected from the group of toluene, methanol, ethanol, butanol, ethyl acetate, isopropanol or water.

**12.** Process for production of crystalline form A of 4-[(6-chloro-3-pyridylmethyl)(2,2-difluoroethyl)amino]furan-2(5H)-one by milling crystalline form B or mixtures of A and B in a bead mill with glass or zirconium oxide beads.

**13.** Crystalline form A of the compound of formula (1) of claim 1, which in a X-ray powder diffractogram at 25°C and with Cu-Kα 1 radiation displays at least the following reflections, quoted as 2Θ value ± 0.2°: 21,0; 22,4; 29,4; 15,0 and 20,1.

**14.** Crystalline form A of the compound of formula (1) of claim 1, which in a X-ray powder diffractogram at 25°C and with Cu-K α 1 radiation displays at least the following reflections, quoted as 2Θ value ± 0.2°: 21,0; 22,4; 29,4; 15,0; 20,1; 33,2 and 33,1, and which in a Raman spectrum displays at least the following bands (peak maximum in $cm^{-1}$): 111, 1711 and 880,
and which in a IR spectrum displays at least the following bands (peak maximum in $cm^{-1}$): 809, 1071 and 1597.

**15.** Use of the crystalline form A according to claim 13 for the production of an agrochemical formulation with improved storage stability.

## Patentansprüche

**1.** Agrochemische Formulierung, umfassend die kristalline Form A von 4-[(6-Chlor-3-pyridylmethyl)(2,2-difluorethyl) amino]furan-2(5H)-on der Formel (1)

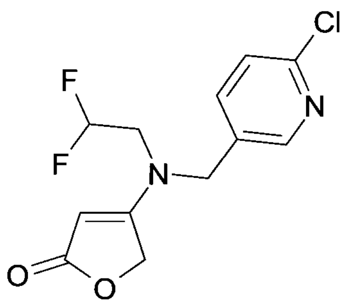

(1)

die in einem Röntgenpulverdiffraktogramm bei 25 °C und Cu-Kα-1-Strahlung mindestens die folgenden Reflexe zeigt, angegeben als 2Θ-Wert ± 0,2°: 21,0; 22,4 und 29,4, und
wobei mindestens 85 Gew.-% des 4-[(6-Chlor-3-pyridylmethyl)(2,2-difluorethyl)amino]furan-2(5H)-ons der Formel (1) in seiner kristallinen Form A vorliegen.

**2.** Agrochemische Formulierung nach Anspruch 1, wobei mindestens 95 Gew.-% des 4-[(6-Chlor-3-pyridylmethyl)(2,2-difluorethyl)amino]furan-2(5H)-ons der Formel (1) in seiner kristallinen Form A vorliegen.

**3.** Agrochemische Formulierung nach Anspruch 1 oder 2, umfassend

a) die polymorphe Form A von 4-[(6-Chlor-3-pyridylmethyl)(2,2-difluorethyl)amino]furan-2(5H)-on,
b) ein oder mehrere Dispergiermittel,
c) ein oder mehrere rheologische Steuerungsmittel (Rheologiemodifikatoren), und
h) Träger (Füllstoff) auf 1 L (Liter).

**4.** Agrochemische Formulierung nach Anspruch 1 oder 2, umfassend

a) die polymorphe Form A von 4-[(6-Chlor-3-pyridylmethyl)(2,2-difluorethyl)amino]furan-2(5H)-on,
b) ein oder mehrere Dispergiermittel,
c) ein oder mehrere rheologische Steuerungsmittel (Rheologiemodifikatoren),
d) ein oder mehrere pH-Puffer,
e) ein oder mehrere Antischaummittel,
f) ein oder mehrere Biozide,
g) ein oder mehrere Frostschutzmittel, und
h) Träger (Füllstoff) auf 1 L (Liter).

**5.** Agrochemische Formulierung nach Anspruch 3, umfassend

a) im Konzentrationsbereich von 400-500 g/L,
b) im Konzentrationsbereich von 60-80 g/L,
c) im Konzentrationsbereich von 6-10 g/L, und
h) Wasser auf 1 L.

**6.** Agrochemische Formulierung nach Anspruch 4, umfassend

a) im Konzentrationsbereich von 400-500 g/L,
b) im Konzentrationsbereich von 60-80 g/L,
c) im Konzentrationsbereich von 6-10 g/L,
d) im Konzentrationsbereich von 0,01-10 g/L,
e) im Konzentrationsbereich von 0,1-2 g/L,
f) im Konzentrationsbereich von 0,1-3 g/L,
g) im Konzentrationsbereich von 10-100 g/L, und
h) Wasser auf 1 L (Liter).

**7.** Agrochemische Formulierung nach einem oder mehreren der vorhergehenden Ansprüche, umfassend einen oder mehrere weitere Hilfsstoffe und Hilfsmittel als Komponente i).

**8.** Agrochemische Formulierung nach einem oder mehreren der vorhergehenden Ansprüche, umfassend einen oder mehrere weitere Wirkstoffe k).

**9.** Verwendung einer agrochemischen Formulierung nach einem oder mehreren der vorhergehenden Ansprüche als Saatgutbeschichtung.

**10.** Verfahren zur Herstellung der kristallinen Form A von 4-[(6-Chlor-3-pyridylmethyl)(2,2-difluorethyl)amino]furan-2(5H)-on, die in einem Röntgenpulverdiffraktogramm bei 25 °C und Cu-K$\alpha$-1-Strahlung die folgenden Reflexe zeigt, angegeben als 2$\Theta$-Wert $\pm$ 0,2°: 21,0; 22,4 und 29,4, umfassend die folgenden Schritte:

a) Verdünnen und/oder Suspendieren der Verbindung der Formel (1) in einem geeigneten Lösungsmittel oder Lösungsmittelgemisch;
b) Einstellen einer Temperatur zwischen 0 und 25 °C; und
c) Lagern der in Schritt b) erhaltenen Lösung oder Aufschlämmung bei einer Temperatur zwischen 0 und 25 °C, bis das Lösungsmittel verdampft ist und sich Kristalle der polymorphen Form A gebildet haben.

**11.** Verfahren nach Anspruch 10, wobei das Lösungsmittel aus der Gruppe Toluol, Methanol, Ethanol, Butanol, Ethylacetat, Isopropanol oder Wasser ausgewählt ist.

**12.** Verfahren zur Herstellung der kristallinen Form A von 4-[(6-Chlor-3-pyridylmethyl)(2,2-difluorethyl)amino]furan-2(5H)-on durch Mahlen der kristallinen Form B oder von Mischungen von A und B in einer Perlenmühle mit Glas- oder Zirkoniumoxidperlen.

**13.** Kristalline Form A der Verbindung der Formel (1) nach Anspruch 1,
die in einem Röntgenpulverdiffraktogramm bei 25 °C und mit Cu-K$\alpha$-1-Strahlung mindestens die folgenden Reflexe zeigt, angegeben als 2$\Theta$-Wert $\pm$ 0,2°: 21,0; 22,4; 29,4; 15,0 und 20,1.

**14.** Kristalline Form A der Verbindung der Formel (1) nach Anspruch 1, die in einem Röntgenpulverdiffraktogramm bei 25 °C und mit Cu-K$\alpha$-1-Strahlung mindestens die folgenden Reflexe zeigt, angegeben als 2$\Theta$-Wert $\pm$ 0,2°: 21,0; 22,4; 29,4; 15,0; 20,1; 33,2 und 33,1, und die in einem Raman-Spektrum mindestens die folgenden Banden zeigt (Peakmaximum in $cm^{-1}$): 111, 1711 und 880,
und die in einem IR-Spektrum mindestens die folgenden Banden aufweist (Peakmaximum in $cm^{-1}$): 809, 1071 und 1597.

**15.** Verwendung der kristallinen Form A nach Anspruch 13 zur Herstellung einer agrochemischen Formulierung mit verbesserter Lagerstabilität.

## Revendications

**1.** Formulation agrochimique comprenant la forme cristalline A de la 4-[(6-chloro-3-pyridylméthyl)(2,2-difluoroéthyl) amino]furan-2(5H)-one de formule (1)

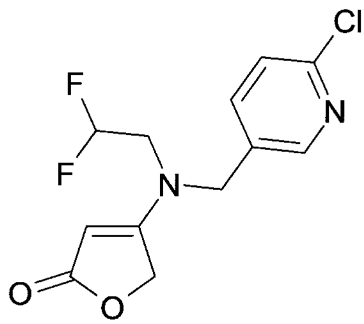

(1)

qui, dans un diffractogramme rayons X sur poudre à 25 °C et sous rayonnement Cu-Kα 1, présente au moins les réflexions suivantes, exprimées en valeur 2Θ ± 0,2° : 21,0 ; 22,4 et 29,4 et **caractérisée en ce que** au moins 85 % en poids de la 4-[(6-chloro-3-pyridylméthyl)(2,2-difluoroéthyl)amino] furan-2(5H)-one de formule (1) se présente sous sa forme cristalline A.

**2.** Formulation agrochimique selon la revendication 1, dans laquelle au moins 95 % en poids de la 4-[(6-chloro-3-pyridylméthyl)(2,2-difluoroéthyl)amino]furan-2(5H)-one de formule (1) est présente sous sa forme cristalline A.

**3.** Formulation agrochimique selon la revendication 1 ou 2, comprenant

a) la forme polymorphe A de la 4-[(6-chloro-3-pyridylméthyl)(2,2-difluoroéthyl)amino]furan-2(5H)-one,
b) un ou plusieurs dispersants,
c) un ou plusieurs agents de contrôle rhéologique (modificateurs rhéologiques), et
h) un support (charge) à 1 L (litre).

**4.** Formulation agrochimique selon la revendication 1 ou 2, comprenant

a) la forme polymorphe A de la 4-[(6-chloro-3-pyridylméthyl)(2,2-difluoroéthyl)amino]furan-2(5H)-one,
b) un ou plusieurs dispersants,
c) un ou plusieurs agents de contrôle rhéologique (modificateurs rhéologiques),
d) un ou plusieurs tampons de pH,
e) un ou plusieurs antimousses,
f) un ou plusieurs biocides,
g) un ou plusieurs agents antigel, et
h) un support (charge) à 1 L (litre).

**5.** Formulation agrochimique selon la revendication 3, comprenant

a) dans la gamme de concentration de 400-500 g/L,
b) dans la gamme de concentration de 60-80 g/L,
c) dans la gamme de concentration de 6-10 g/L, et
h) de l'eau à 1 L.

**6.** Formulation agrochimique selon la revendication 4, comprenant

a) dans la gamme de concentration de 400-500 g/L,
b) dans la gamme de concentration de 60-80 g/L,
c) dans la gamme de concentration de 6-10 g/L,
d) dans la gamme de concentration de 0,01-10 g/L,
e) dans la gamme de concentration de 0,1-2 g/L,
f) dans la gamme de concentration de 0,1-3 g/L,

g) dans la gamme de concentration de 10-100 g/L, et
h) de l'eau à 1 L (litre).

**7.** Formulation agrochimique selon une ou plusieurs des revendications précédentes, comprenant un ou plusieurs autres adjuvants et auxiliaires en tant que composant i).

**8.** Formulation agrochimique selon l'une ou plusieurs des revendications précédentes, comprenant un ou plusieurs autres principes actifs k).

**9.** Utilisation d'une formulation agrochimique selon une ou plusieurs des revendications précédentes comme enrobage de semences.

**10.** Procédé de fabrication de la forme cristalline A de la 4-[(6-chloro-3-pyridylméthyl)(2,2-difluoroéthyl)amino]furan-2(5H)-one, qui, dans un diffractogramme de poudre de rayons X à 25 °C et sous rayonnement Cu-K$\alpha$ 1, présente les réflexions suivantes, citées comme valeur de $2\Theta \pm 0,2°$ : 21,0 ; 22,4 et 29,4, comprenant les étapes suivantes :

a) diluant et/ou mettant en suspension le composé de formule (1) dans un solvant ou un mélange de solvants approprié ;
b) ajustant la température entre 0 et 25 °C ; et
c) stockant la solution ou la boue obtenue à l'étape b) à une température comprise entre 0 et 25 °C jusqu'à évaporation du solvant et formation de cristaux de la forme polymorphe A.

**11.** Procédé selon la revendication 10, dans lequel le solvant est choisi dans le groupe constitué par le toluène, le méthanol, l'éthanol, le butanol, l'acétate d'éthyle, l'isopropanol ou l'eau.

**12.** Procédé de fabrication de la forme cristalline A de la 4-[(6-chloro-3-pyridylméthyl)(2,2-difluoroéthyl)amino]furan-2(5H)-one par broyage de la forme cristalline B ou de mélanges de A et B dans un broyeur à billes avec des billes de verre ou d'oxyde de zirconium.

**13.** Forme cristalline A du composé de formule (1) selon la revendication 1,
qui, dans un diffractogramme rayons X sur poudre à 25 °C et avec un rayonnement Cu-K$\alpha$ 1, présente au moins les réflexions suivantes, cotées en valeur $2\Theta \pm 0,2°$ : 21,0 ; 22,4 ; 29,4 ; 15,0 et 20,1.

**14.** Forme cristalline A du composé de formule (1) selon la revendication 1, qui, dans un diffractogramme de poudre de rayons X à 25 °C et avec un rayonnement Cu-K$\alpha$ 1, présente au moins les réflexions suivantes, citées comme valeur de $2\Theta \pm 0,2°$ : 21,0 ; 22,4 ; 29,4 ; 15,0 ; 20,1 ; 33,2 et 33,1, et qui, dans un spectre Raman, présente au moins les bandes suivantes (maximum des pics en $cm^{-1}$) : 111, 1711 et 880,
et qui, dans un spectre IR, présente au moins les bandes suivantes (maximum de crête en $cm^{-1}$) : 809, 1071 et 1597.

**15.** Utilisation de la forme cristalline A selon la revendication 13 pour la production d'une formulation agrochimique à stabilité de stockage améliorée.

**Fig. 1a:** X-ray powder diffractogram of polymorphic form A of 4-[(6-chloro-3-pyridylmethyl)(2,2-difluoroethyl)amino]furan-2(5H)-one

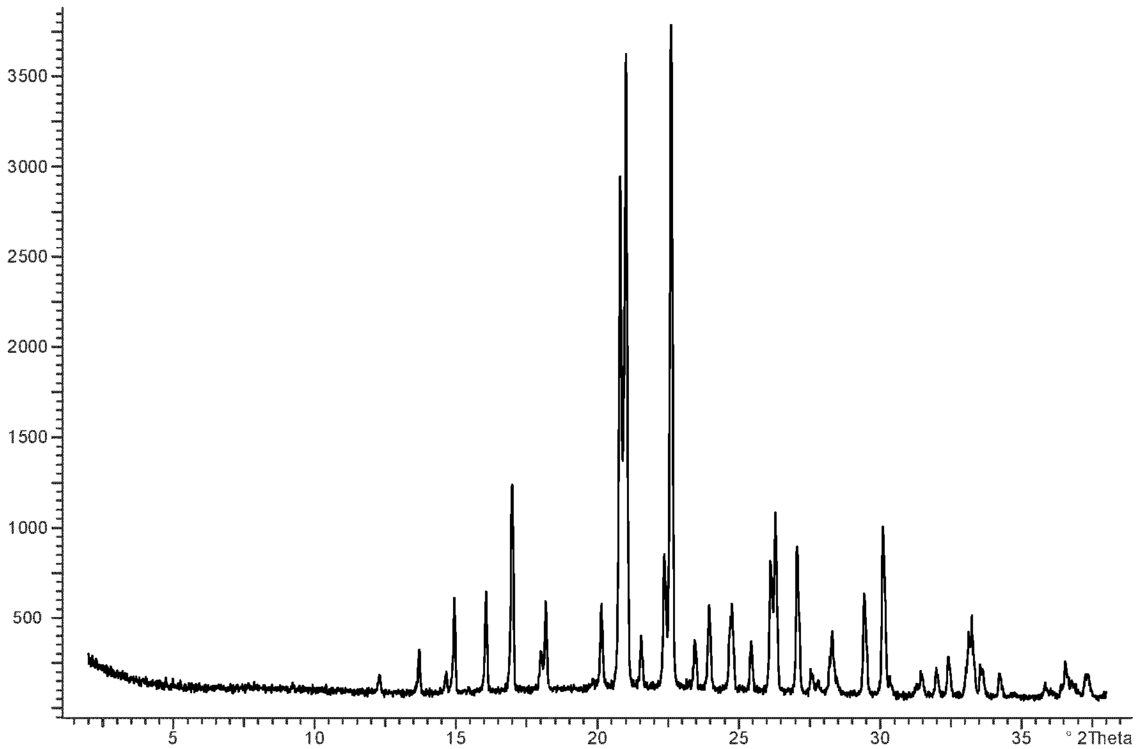

**Fig. 1b:** FT Raman spectrum of polymorphic form A of of 4-[(6-chloro-3-pyridylmethyl)(2,2-difluoroethyl)amino]furan-2(5H)-one

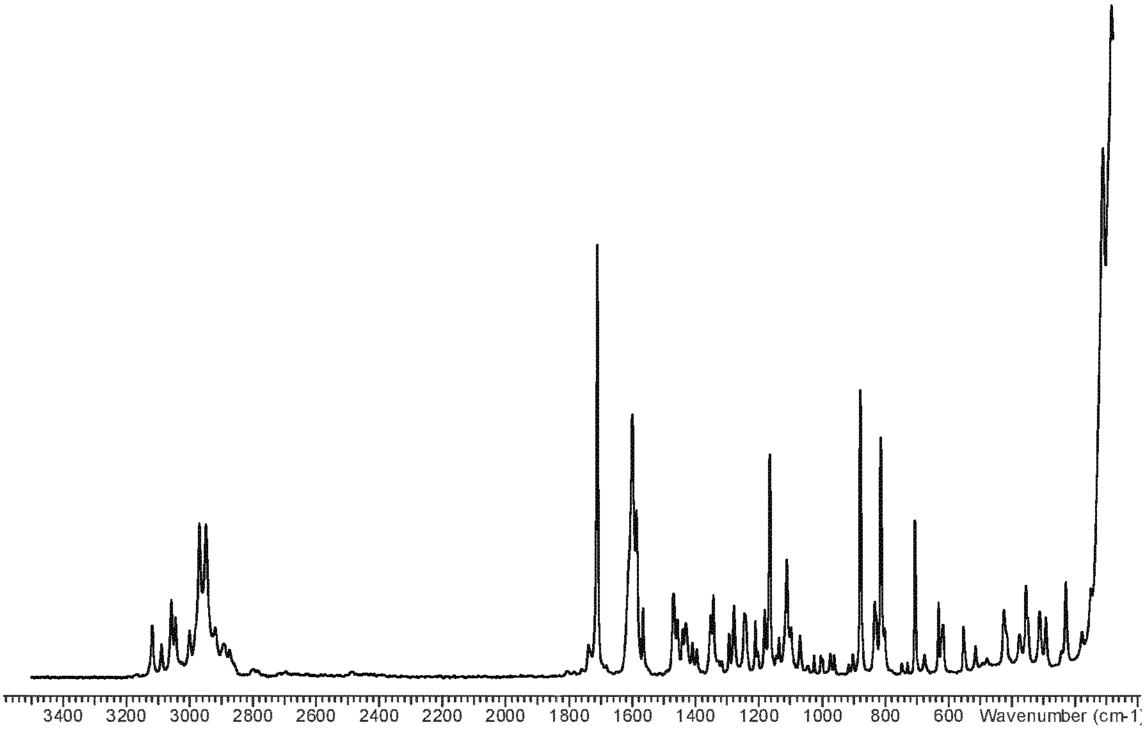

**Fig. 1c:** IR spectrum of polymorphic form A of of 4-[(6-chloro-3-pyridylmethyl)(2,2-difluoroethyl)amino]furan-2(5H)-one

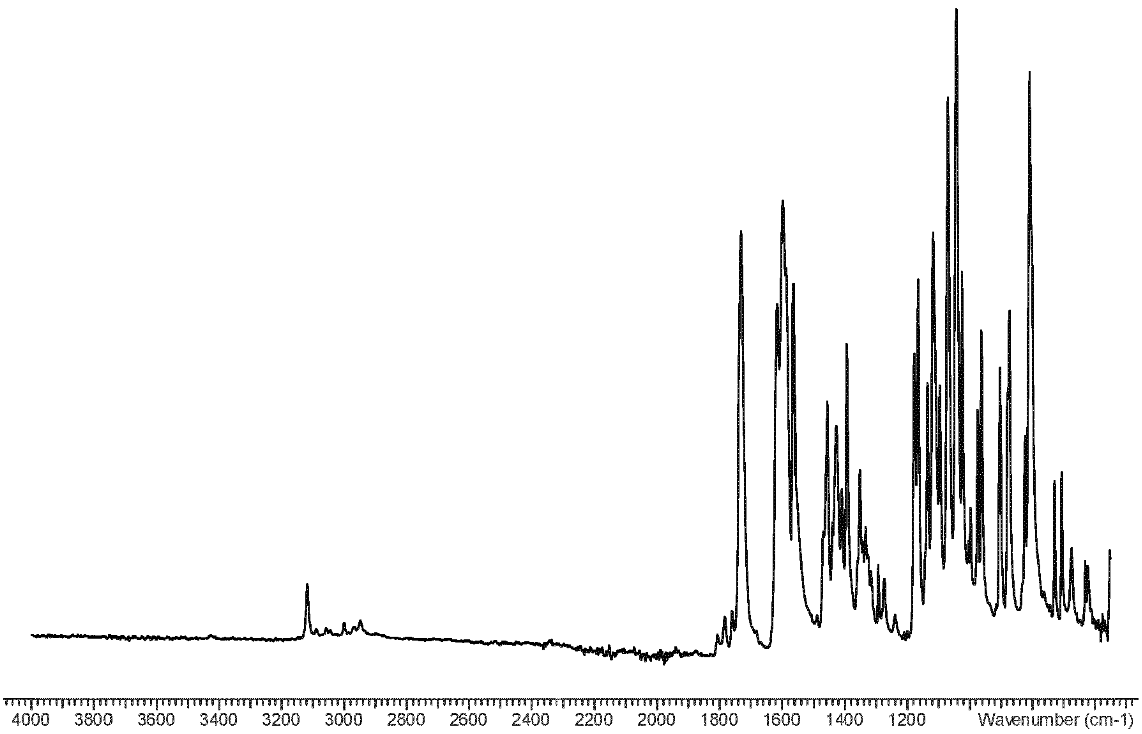


**Fig. 1d:** DSC thermogram of polymorphic form A

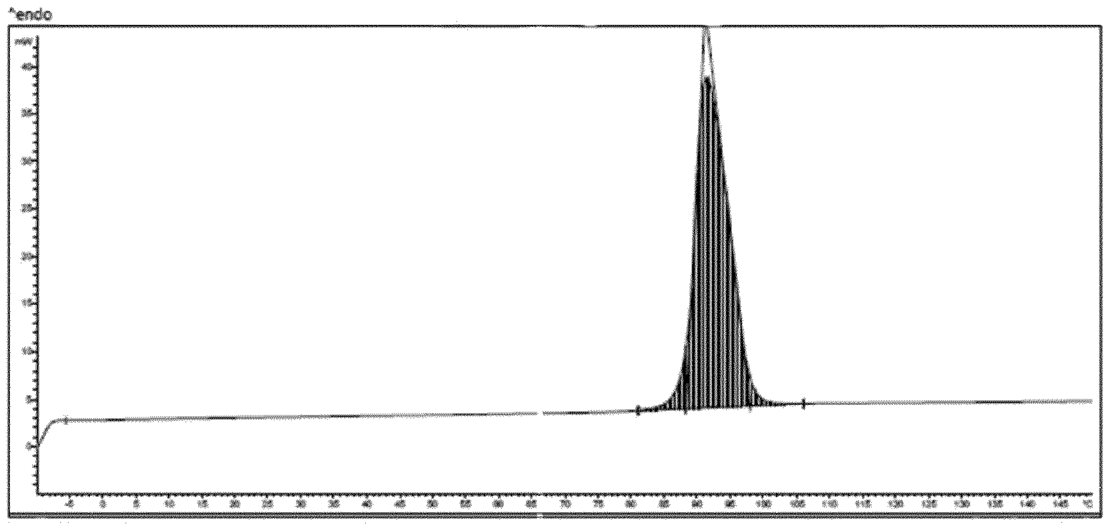

**Fig. 2a:** X-ray powder diffractogram of polymorphic form B of of 4-[(6-chloro-3-pyridylmethyl)(2,2-difluoroethyl)amino]furan-2(5H)-one

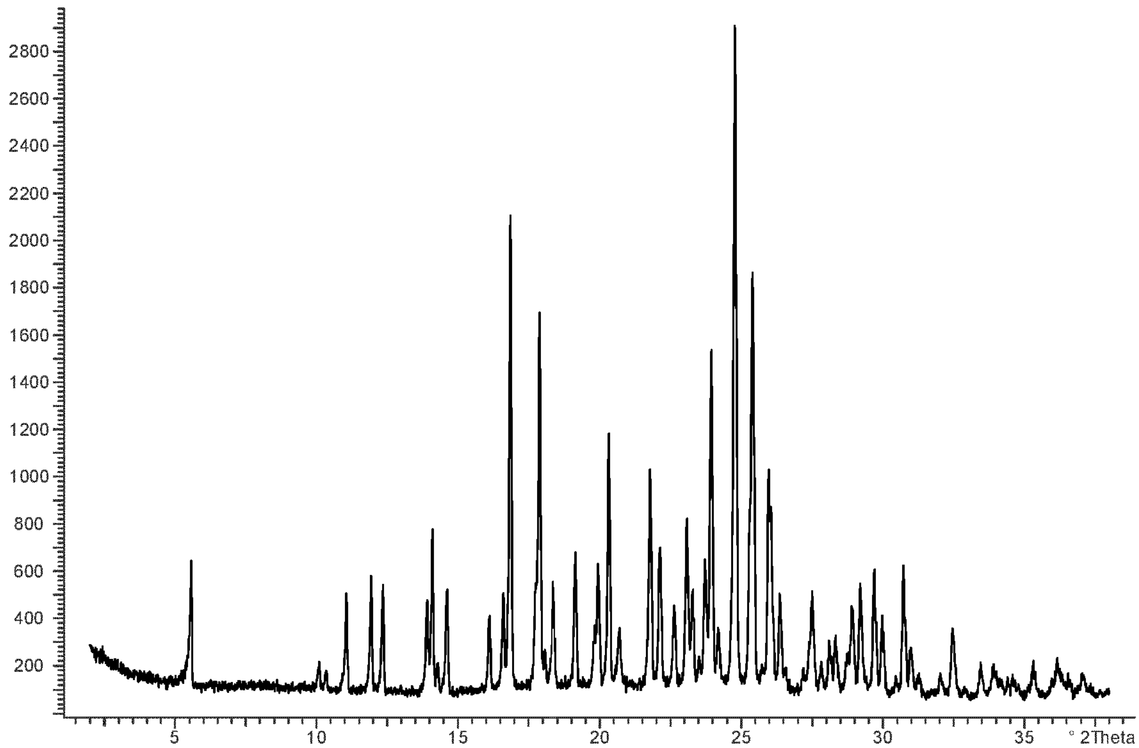

**Fig. 2b:** FT Raman spectrum of polymorphic form B of of 4-[(6-chloro-3-pyridylmethyl)(2,2-difluoroethyl)amino]furan-2(5H)-one

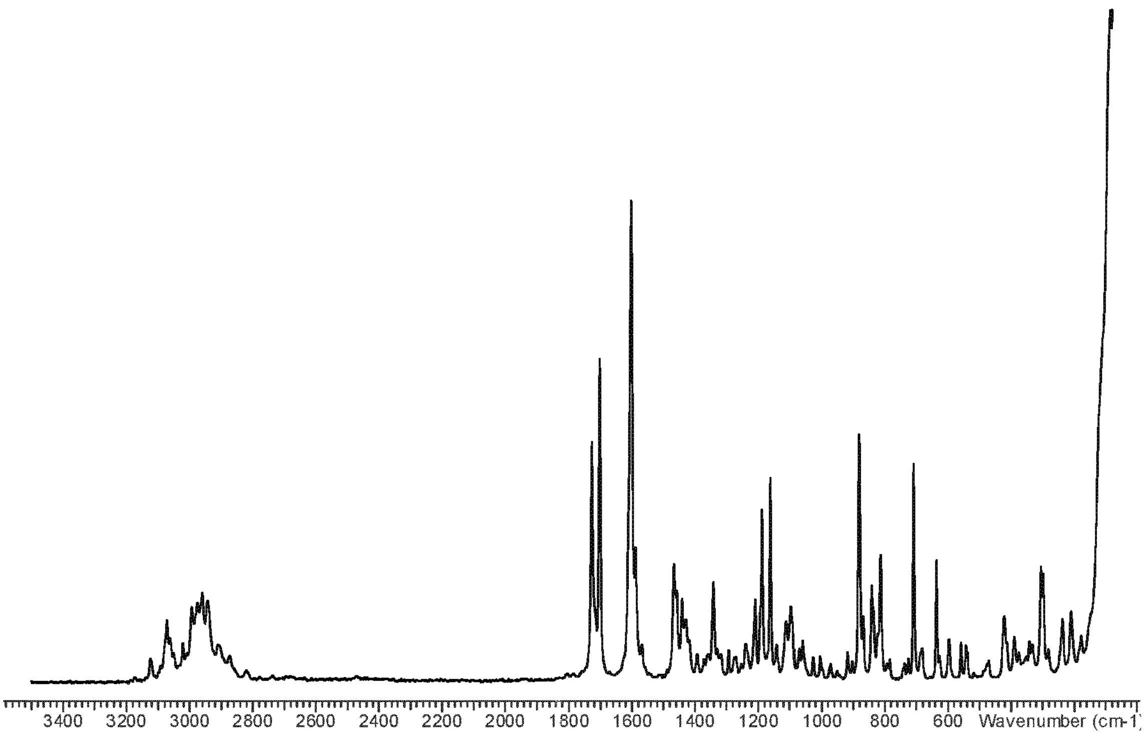

**Fig. 2c:** IR spectrum of polymorphic form B of of 4-[(6-chloro-3-pyridylmethyl)(2,2-difluoroethyl)amino]furan-2(5H)-one

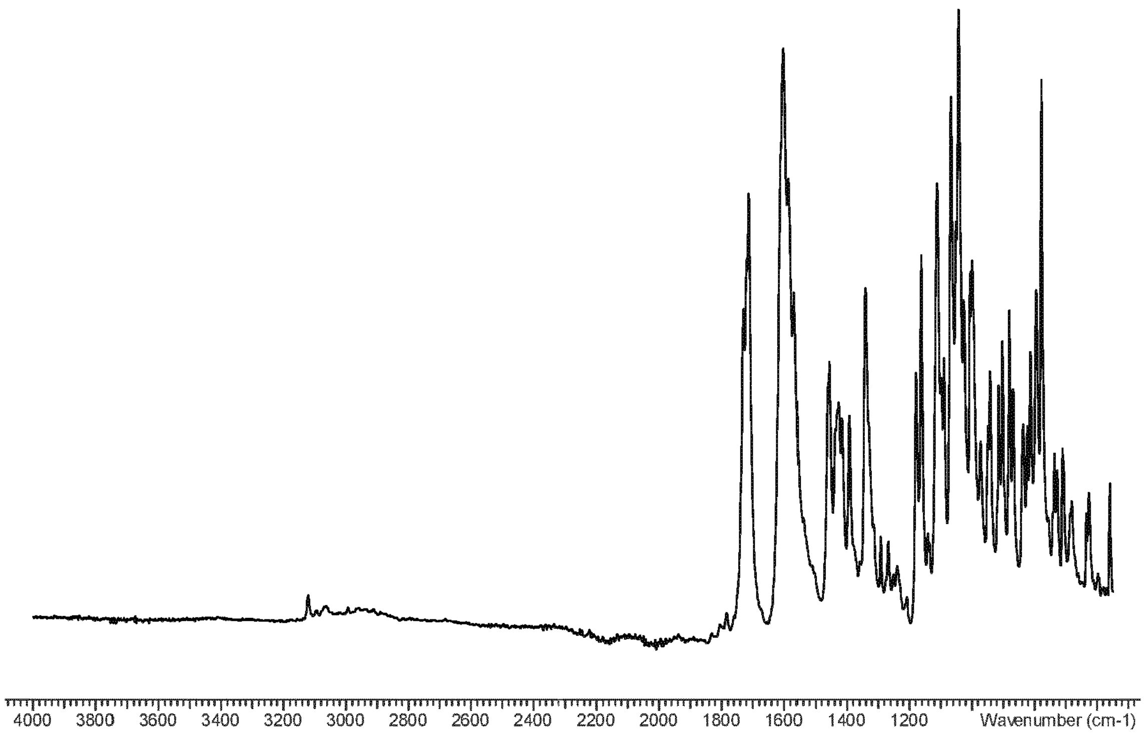


**Fig. 2d:** DSC thermogram of polymorphic form B

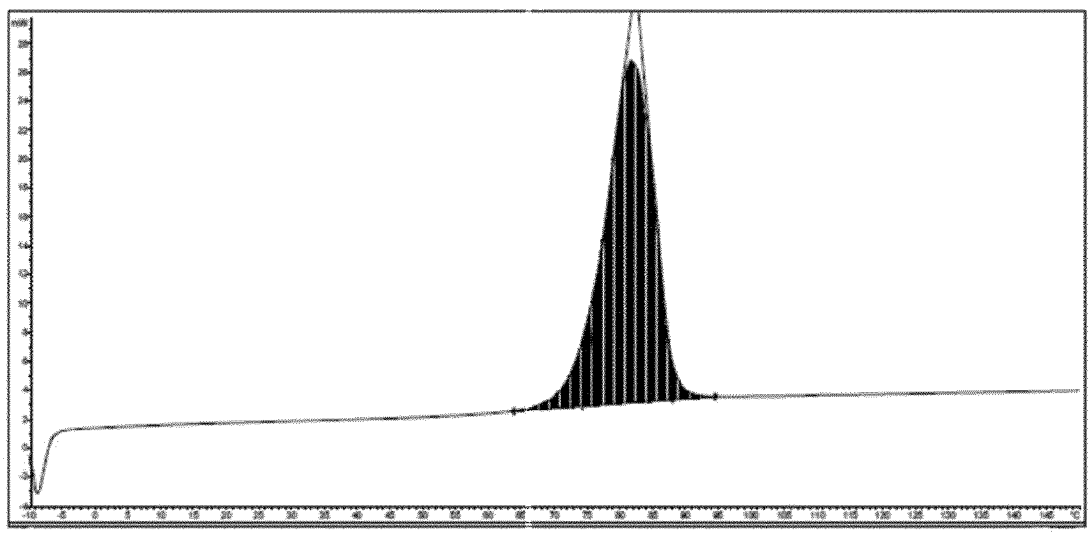

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007115644 A
- WO 2009036899 A
- WO 2011051151 A
- WO 2006043635 A
- WO 2006003494 A
- WO 2010052161 A
- EP 2647626 A
- JP 2010018586 A
- WO 2013144213 A
- WO 2010051926 A
- CN 103232431
- WO 2013050317 A1
- WO 2013162715 A2
- WO 2013162716 A2
- US 20140213448 A1
- CN 101337937 A
- CN 103109816 A
- WO 2012034403 A1
- WO 2011085575 A1
- CN 101337940 A
- CN 101715774 A
- CN 103524422 A
- CN 102391261 A
- US 20140275503 A1
- WO 2007040280 A1
- WO 2007040282 A1
- CN 103265527 A
- WO 2014187846 A1
- WO 2010066780 A1
- WO 2011151146 A1
- WO 2014053450 A1
- WO 2018177970 A1
- WO 2019236274 A1
- WO 2019059412 A1
- CN 110835330 A
- CN 106977494 A


### Non-patent literature cited in the description


- **AUSTIN, L.G.** ; **KLIMPEL, R.R.** ; **LUCKIE, P.T.** *Process engineering of size reduction: ball milling. Society of Mining Engineers of the AIME*, 1984
- Catalogue of pesticide formulation types and international coding system. *Technical Monograph*, March 2017 (2)
- *CHEMICAL ABSTRACTS*, 128-37-0
- *CHEMICAL ABSTRACTS*, 26172-55-4
- *CHEMICAL ABSTRACTS*, 2682-20-4
- *CHEMICAL ABSTRACTS*, 2634-33-5
- **BAUR et al.** *Pesticide Science*, 1997, vol. 51, 131-152
- **R. WEGLER**. Chemie der Pflanzenschutz- and Schädlingsbekämpfungsmittel. Springer Verlag, 1970, vol. 2, 401-412
- The Pesticide Manual. British Crop Protection Council, 2012
- *CHEMICAL ABSTRACTS*, 2375110-88-4
- *CHEMICAL ABSTRACTS*, 1771741-86-6
- *CHEMICAL ABSTRACTS*, 885026-50-6
- *CHEMICAL ABSTRACTS*, 872999-66-1
- *CHEMICAL ABSTRACTS*, 1225292-17-0
- *CHEMICAL ABSTRACTS*, 1440516-42-6
- *CHEMICAL ABSTRACTS*, 1204776-60-2
- *CHEMICAL ABSTRACTS*, 1461743-15-6
- *CHEMICAL ABSTRACTS*, 1226889-14-0
- *CHEMICAL ABSTRACTS*, 1449220-44-3
- *CHEMICAL ABSTRACTS*, 1332628-83-7
- *CHEMICAL ABSTRACTS*, 1477923-37-7
- *CHEMICAL ABSTRACTS*, 1105672-77-2
- *CHEMICAL ABSTRACTS*, 1232543-85-9
- *CHEMICAL ABSTRACTS*, 1268277-22-0
- *CHEMICAL ABSTRACTS*, 1233882-22-8
- *CHEMICAL ABSTRACTS*, 1108184-52-6
- *CHEMICAL ABSTRACTS*, 1542271-46-4
- *CHEMICAL ABSTRACTS*, 1370358-69-2
- *CHEMICAL ABSTRACTS*, 1181213-14-8
- *CHEMICAL ABSTRACTS*, 1253850-56-4
- *CHEMICAL ABSTRACTS*, 933798-27-7
- *CHEMICAL ABSTRACTS*, 934001-66-8
- *CHEMICAL ABSTRACTS*, 1452877-50-7
- *CHEMICAL ABSTRACTS*, 1638765-58-8
- *CHEMICAL ABSTRACTS*, 1229023-00-0
- *CHEMICAL ABSTRACTS*, 1594624-87-9
- *CHEMICAL ABSTRACTS*, 1594637-65-6
- *CHEMICAL ABSTRACTS*, 1594626-19-3
- *CHEMICAL ABSTRACTS*, 2246757-58-2
- *CHEMICAL ABSTRACTS*, 2246757-56-0
- *CHEMICAL ABSTRACTS*, 2396747-83-2
- *CHEMICAL ABSTRACTS*, 1207977-87-4
- *CHEMICAL ABSTRACTS*, 2129147-03-9
- *CHEMICAL ABSTRACTS*, 129531-12-0

- *CHEMICAL ABSTRACTS*, 71526-07-3
- *CHEMICAL ABSTRACTS*, 52836-31-4